(19) Europäisches Patentamt
European Patent Office
Office européen des brevets

(11) EP 4 637 219 A1

(12) **EUROPEAN PATENT APPLICATION**
published in accordance with Art. 153(4) EPC

(43) Date of publication:
**22.10.2025 Bulletin 2025/43**

(21) Application number: **23902474.8**

(22) Date of filing: **27.11.2023**

(51) International Patent Classification (IPC):
**H04W 52/02** (2009.01)

(52) Cooperative Patent Classification (CPC):
**H04W 52/02;** Y02D 30/70

(86) International application number:
**PCT/CN2023/134209**

(87) International publication number:
**WO 2024/125276 (20.06.2024 Gazette 2024/25)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **14.12.2022 CN 202211611704**

(71) Applicant: **SHANGHAI LANGBO COMMUNICATION TECHNOLOGY COMPANY LIMITED**
**Shanghai 200240 (CN)**

(72) Inventors:
• **LIU, Zheng**
  **Shanghai 201206 (CN)**
• **ZHANG, Xiaobo**
  **Shanghai 201206 (CN)**

(74) Representative: **Gunzelmann, Rainer**
**Wuesthoff & Wuesthoff**
**Patentanwälte und Rechtsanwalt PartG mbB**
**Schweigerstraße 2**
**81541 München (DE)**

(54) **METHOD AND APPARATUS USED IN NODE FOR WIRELESS COMMUNICATION**

(57)    Disclosed in the present application are a method and apparatus used in a node for wireless communication. The method comprises: a node receiving a first information block and monitoring a target wake-up signal, wherein the first information block is used for determining X1 configuration sets, and any one of the X1 configuration sets comprises at least one configuration parameter value; and the node determining whether to monitor first signaling in a first occasion, wherein the target wake-up signal carries a second information block, the second information block determines whether to monitor the first signaling in the first occasion, a target configuration set is one of the X1 configuration sets, a monitor of the target wake-up signal belongs to a first device group, at least one of an identifier of the first device group or the time-domain position of the first occasion is used for determining the target configuration set from among the X1 configuration sets, and an identifier of the monitor of the target wake-up signal is used for determining the first occasion. The present application improves the performance.

FIG. 1

EP 4 637 219 A1

## Description

### Technical Field

The present application relates to a transmission method and apparatus in a wireless communication system, in particular to a low-power transmission scheme and apparatus in wireless communication.

### Background Art

In the future, the application scenarios of a wireless communication system will become more and more diversified, and different application scenarios impose different performance requirements for the system. In order to meet the different performance requirements of various application scenarios, it was decided at the #72 plenary meeting of the 3GPP (3rd Generation Partner Project) RAN (Radio Access Network) to carry out a study on the new radio (NR) technology (or 5G). At the #75 plenary meeting of the 3GPP RAN, the WI (Work Item) of the new radio (NR) technology was approved, and the standardization work on NR was initiated.

In the new radio technology, power consumption is an important indicator to measure technical performance. In order to adapt to diverse application scenarios and meet different needs, 3GPP has been evolving power consumption reduction technologies.

### Summary of the Invention

Among the various power consumption reduction technologies, it is considered an effective method to wake up a receiver in advance by user equipment (UE) or a network device (gNB/eNB) through a wake-up signal. In response to a demand for reducing power consumption in an NR system, the present application discloses a solution. It should be noted that in the description of the present application, reducing power consumption is only used as a typical application scenario or example; and the wake-up signal in the present application is also applicable to other scenarios facing similar problems (such as other scenarios needing pre-waking, including but not limited to capacity enhancement systems, short-range communication systems, unlicensed frequency-domain communication, IoT (Internet of Things), URLLC (Ultra Reliable Low Latency Communication) networks, Vehicle-to-Everything, etc.), where similar technical effects can also be achieved. In addition, adopting a unified solution for different scenarios (including, but not limited to, multi-carrier scenarios) can also help to reduce hardware complexity and costs. In the case of no conflict, embodiments and features in the embodiments of a first node device of the present application may be applied to a second node device, and vice versa. In particular, the interpretation of the terminologies, nouns, functions, and variables in the present application (if not specifically noted) can refer to the definitions in the specification protocols TS36 series, TS38 series, and TS37 series of 3GPP.

The present application discloses a method used in a first node for wireless communication, comprising:

receiving a first information block and monitoring a target wake-up signal, wherein the first information block is used for determining X1 configuration sets, any one of the X1 configuration sets comprises at least 1 configuration parameter value, and the X1 is a positive integer greater than 1;
and determining whether to monitor first signaling in a first occasion;
wherein the target wake-up signal carries a second information block, and the second information block is used for determining whether to monitor the first signaling in the first occasion; a target configuration set is one of the X1 configuration sets, and the target configuration set comprises at least 1 configuration parameter value of the target wake-up signal; a monitor of the target wake-up signal belongs to a first device group, and the first device group comprises at least 1 piece of user equipment; and at least one of an identifier of the first device group or the time-domain position of the first occasion is used for determining the target configuration set from the X1 configuration sets, and an identifier of the monitor of the target wake-up signal is used for determining the first occasion.

As one embodiment, the target configuration set is determined by the identifier of the first device group or the time-domain position of a first time window, thereby supporting different types of wake-up signal receivers and enhancing the implementation flexibility.

As one embodiment, wake-up signals with different configurations are supported, thereby optimizing the design of the wake-up signal.

According to one aspect of the present application, the above method is characterized in that, the first device group is one of X2 device groups, X2 identifiers respectively correspond to the X2 device groups, any one of the X2 device groups comprises at least 1 piece of user equipment, and the X2 is a positive integer greater than 1; and a first identifier and a second identifier are respectively two different identifiers in the X2 identifiers, one piece of user equipment included in the device group corresponding to the first identifier in the X2 device groups is assigned the first identifier, and one piece of user equipment included in the device group corresponding to the second identifier in the X2 device groups is not assigned an identifier or is assigned the second identifier.

As one embodiment, a fallback or default device group is introduced to provide support for user equipment with different capabilities, thereby ensuring the compatibility of a system.

According to one aspect of the present application, the above method is characterized in that, the first occasion belongs to a first occasion group, the first occasion group is one of X1 occasion groups, and any one of the X1 occasion groups comprises at least one occasion; any occasion included in any one of the X1 occasion groups belongs to a first time window, and the first information block is used for determining the X1 occasion groups from the first time window; and the X1 occasion groups correspond to the X1 configuration sets one by one, and the target configuration set is a configuration set corresponding to the first occasion group.

As one embodiment, occasions are grouped according to the first time window to maximize the flexibility of the configuration of the wake-up signal.

According to one aspect of the present application, the above method is characterized by comprising:

transmitting a third information block;
wherein the third information block is used for indicating at least 1 band, and a monitor of the target wake-up signal supports a reception of a wake-up signal on each band indicated by the third information block.

As one embodiment, the reception of the wake-up signal is supported on each band indicated by the third information block, such that the performance of the receiver can be considered more flexibly, and the configuration and reception performance of the wake-up signal can be optimized.

According to one aspect of the present application, the above method is characterized in that, the first information block is used for determining a time-domain position relationship between a time-domain resource occupied by the target wake-up signal and the first occasion, and the first information block is used for determining a number of device groups associated with the first occasion.

According to one aspect of the present application, the above method is characterized by comprising:

determining whether to monitor second signaling;
wherein the second signaling is used for indicating whether to monitor the first signaling in the first occasion; and at least one of the second information block or the first device group is used for determining whether to monitor the second signaling.

According to one aspect of the present application, the above method is characterized in that, the target configuration set comprises at least one of a configuration parameter value of a frequency-domain resource occupied by the target wake-up signal, a configuration parameter value of a number of information bits included in the second information block, a configuration parameter value of a sequence generating the target wake-up signal, and a configuration parameter value of a number of time-domain resources occupied by the target wake-up signal.

The present application discloses a method used in a second node for wireless communication, characterized by comprising:

transmitting a first information block and transmitting a target wake-up signal, wherein the first information block is used for determining X1 configuration sets, any one of the X1 configuration sets comprises at least 1 configuration parameter value, and the X1 is a positive integer greater than 1;
and transmitting first signaling in a first occasion;
wherein the target wake-up signal carries a second information block, and the second information block is used for determining whether to monitor the first signaling in the first occasion; a target configuration set is one of the X1 configuration sets, and the target configuration set comprises at least 1 configuration parameter value of the target wake-up signal; a monitor of the target wake-up signal belongs to a first device group, and the first device group comprises at least 1 piece of user equipment; and at least one of an identifier of the first device group or the time-domain position of the first occasion is used for determining the target configuration set from the X1 configuration sets, and an identifier of the monitor of the target wake-up signal is used for determining the first occasion.

According to one aspect of the present application, the above method is characterized in that, the first device group is one of X2 device groups, X2 identifiers respectively correspond to the X2 device groups, any one of the X2 device groups comprises at least 1 piece of user equipment, and the X2 is a positive integer greater than 1; and a first identifier and a second identifier are respectively two different identifiers in the X2 identifiers, one piece of user equipment included in the device group corresponding to the first identifier in the X2 device groups is assigned the first identifier, and one piece of user equipment included in the device group corresponding to the second identifier in the X2 device groups is not assigned an identifier or is assigned the second identifier.

According to one aspect of the present application, the above method is characterized in that, the first occasion belongs to a first occasion group, the first occasion group is one of X 1 occasion groups, and any one of the X1 occasion groups comprises at least one occasion; any occasion included in any one of the X1 occasion groups belongs to a first time window, and the first information block is used for determining the X1 occasion groups from the first time window; and the X1 occasion groups correspond to the X1 configuration sets one by one, and the target configuration set is a configuration set corresponding to the first occasion group.

According to one aspect of the present application, the above method is characterized by comprising:

receiving a third information block;
wherein the third information block is used for indicating at least 1 band, and a monitor of the target wake-up signal supports a reception of a wake-up signal on each band indicated by the third information block.

According to one aspect of the present application, the above method is characterized in that, the first information block is used for determining a time-domain position relationship between a time-domain resource occupied by the target wake-up signal and the first occasion, and the first information block is used for determining a number of device groups associated with the first occasion.

According to one aspect of the present application, the above method is characterized by comprising:

transmitting second signaling;
wherein the second signaling is used for indicating whether to monitor the first signaling in the first occasion; and at least one of the second information block or the first device group is used for determining whether to monitor the second signaling.

According to one aspect of the present application, the above method is characterized in that, the target configuration set comprises at least one of a configuration parameter value of a frequency-domain resource occupied by the target wake-up signal, a configuration parameter value of a number of information bits included in the second information block, a configuration parameter value of a sequence generating the target wake-up signal, and a configuration parameter value of a number of time-domain resources occupied by the target wake-up signal.

The present application discloses a first node device used in wireless communication, characterized by comprising:

a first transceiver for receiving a first information block and monitoring a target wake-up signal, wherein the first information block is used for determining X1 configuration sets, any one of the X1 configuration sets comprises at least 1 configuration parameter value, and the X1 is a positive integer greater than 1;
and a first receiver for determining whether to monitor first signaling in a first occasion;
wherein the target wake-up signal carries a second information block, and the second information block is used for determining whether to monitor the first signaling in the first occasion; a target configuration set is one of the X1 configuration sets, and the target configuration set comprises at least 1 configuration parameter value of the target wake-up signal; a monitor of the target wake-up signal belongs to a first device group, and the first device group comprises at least 1 piece of user equipment; and at least one of an identifier of the first device group or the time-domain position of the first occasion is used for determining the target configuration set from the X1 configuration sets, and an identifier of the monitor of the target wake-up signal is used for determining the first occasion.

The present application discloses a second node device used in wireless communication, characterized by comprising:

a second transceiver for transmitting a first information block and transmitting a target wake-up signal, wherein the first information block is used for determining X1 configuration sets, any one of the X1 configuration sets comprises at least 1 configuration parameter value, and the X1 is a positive integer greater than 1;
and a first transmitter for transmitting first signaling in a first occasion;
wherein the target wake-up signal carries a second information block, and the second information block is used for determining whether to monitor the first signaling in the first occasion; a target configuration set is one of the X1 configuration sets, and the target configuration set comprises at least 1 configuration parameter value of the target wake-up signal; a monitor of the target wake-up signal belongs to a first device group, and the first device group comprises at least 1 piece of user equipment; and at least one of an identifier of the first device group or the time-domain position of the first occasion is used for determining the target configuration set from the X1 configuration sets,

**EP 4 637 219 A1**

and an identifier of the monitor of the target wake-up signal is used for determining the first occasion.

## Brief Description of the Drawings

Other features, purposes and advantages of the present application will become more apparent from reading the detailed description of the non-limiting embodiments made with reference to the following figures:

FIG. 1 shows a flowchart of a first information block, a target wake-up signal and first signaling according to one embodiment of the present application;
FIG. 2 shows a schematic diagram of a network architecture according to one embodiment of the present application;
FIG. 3 shows a schematic diagram of a radio protocol architecture for a user plane and a control plane according to one embodiment of the present application;
FIG. 4 shows a schematic diagram of a first node device and a second node device according to one embodiment of the present application;
FIG. 5 shows a flowchart of wireless signal transmission according to one embodiment of the present application;
FIG. 6 shows another flowchart of wireless signal transmission according to one embodiment of the present application;
FIG. 7 shows a schematic diagram of a first identifier and a second identifier according to one embodiment of the present application;
FIG. 8 shows a schematic diagram of X1 occasion groups according to one embodiment of the present application;
FIG. 9 shows a schematic diagram of a relationship between a target wake-up signal and a first occasion according to one embodiment of the present application;
FIG. 10 shows a schematic diagram of a relationship between second signaling and first signaling according to one embodiment of the present application;
FIG. 11 shows a schematic diagram of a target configuration set according to one embodiment of the present application;
FIG. 12 shows a structural block diagram of a processing apparatus in a first node device according to one embodiment of the present application; and
FIG. 13 shows a structural block diagram of a processing apparatus in a second node device according to one embodiment of the present application.

## Detailed Description of Embodiments

The technical solution of the present application will be further described in detail below in conjunction with the drawings. It should be noted that, in the case of no conflict, embodiments and the features in the embodiments of the present application can be arbitrarily combined with each other.

## Embodiment 1

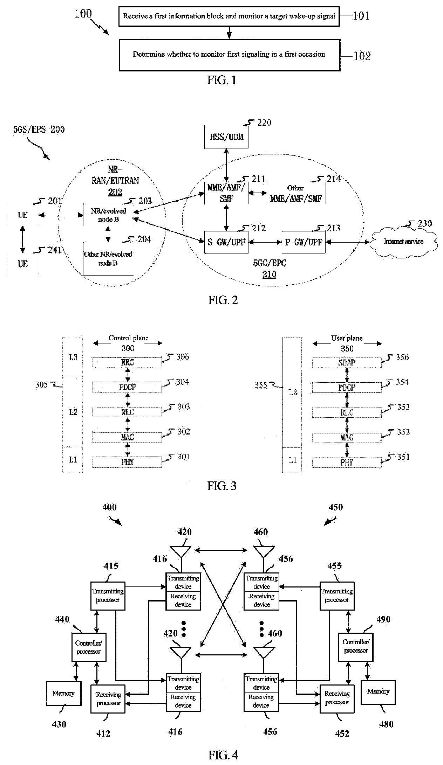

Embodiment 1 illustrates a flowchart 100 of a first information block, a target wake-up signal and first signaling according to one embodiment of the present application, as shown in FIG. 1. In FIG. 1, each block represents one step, and it should be particularly emphasized that the order of the blocks in the figure does not limit the chronological relationship of the steps represented.

In Embodiment 1, a first node device in the present application receives a first information block and monitors a target wake-up signal in step 101, the first information block is used for determining X1 configuration sets, any one of the X1 configuration sets comprises at least 1 configuration parameter value, and the X1 is a positive integer greater than 1; in step 102, the first node device in the present application determines whether to monitor first signaling in a first occasion, wherein the target wake-up signal carries a second information block, and the second information block is used for determining whether to monitor the first signaling in the first occasion; a target configuration set is one of the X1 configuration sets, and the target configuration set comprises at least 1 configuration parameter value of the target wake-up signal; a monitor of the target wake-up signal belongs to a first device group, and the first device group comprises at least 1 piece of user equipment; and at least one of an identifier of the first device group or the time-domain position of the first occasion is used for determining the target configuration set from the X1 configuration sets, and an identifier of the monitor of the target wake-up signal is used for determining the first occasion.

As one embodiment, the first information block is transmitted via an air interface or a wireless interface.

As one embodiment, the first information block comprises all or part of a high-layer signaling or a physical layer signaling.

As one embodiment, the first information block comprises all or part of one RRC (Radio Resource Control) layer

5

signaling, or the first information block comprises all or part of one MAC (Medium Access Control) layer signaling.

As one embodiment, the first information block comprises all or part of one system information block (SIB).

As one embodiment, the first information block comprises all or part of one SIB1.

As one embodiment, the first information block is UE-specific, or the first information block is cell-specific.

As one embodiment, the first information block is configured per carrier, or the first information block is configured per BWP (bandwidth part), or the first information block is configured per band or per frequency range (FR).

As one embodiment, the first information block comprises all or part of fields in a DCI (Downlink Control Information) format.

As one embodiment, the first information block comprises all or part of IE (Information Element) "PCCH-Config"; or the first information block comprises all or part of IE "DownlinkConfigCommonSIB"; or the first information block comprises all or part of IE "WUS-Config-r19"; or the first information block comprises all or part of IE "LPWUS-Config-r19"; or the first information block comprises all or part of IE "WUS-Config"; or the first information block comprises all or part of IE "LPWUS-Config".

As one embodiment, the first information block comprises all or part of paging configuration information.

As one embodiment, the first information block comprises all or part of downlink common configuration information.

As one embodiment, the first information block comprises all or part of wake-up signal configuration information.

As one embodiment, the technical feature "the first information block is used for determining X1 configuration sets" comprises the following meaning: the first information block is used by the first node device in the present application for determining the X1 configuration sets.

As one embodiment, the technical feature "the first information block is used for determining X1 configuration sets" comprises the following meaning: all or part comprised in the first information block is used for explicitly or implicitly indicating the X1 configuration sets.

As one embodiment, the technical feature "the first information block is used for determining X1 configuration sets" comprises the following meaning: all or part included in the first information block is used for explicitly or implicitly indicating one of the X1 configuration sets.

As one embodiment, the technical feature "the first information block is used for determining X1 configuration sets" comprises the following meaning: all or part included in the first information block is used for explicitly or implicitly indicating partial configuration sets in the X1 configuration sets, and at least 1 of the X1 configuration sets is a default configuration set.

As one embodiment, the technical feature "the first information block is used for determining X1 configuration sets" comprises the following meaning: the X1 configuration sets belong to one configuration set list, and the first information block is used for adding a configuration set to the configuration set list, or the first information block is used for releasing a configuration set from the configuration set list.

As one embodiment, the technical feature "the first information block is used for determining X1 configuration sets" comprises the following meaning: the first information block is used for adding a configuration set to a configuration set list to which the X1 configuration sets belong, or the first information block is used for releasing a configuration set from the configuration set list to which the X1 configuration sets belong.

As one embodiment, the target wake-up signal is a low power wake up signal (LPWUS).

As one embodiment, the target wake-up signal is a square wave signal.

As one embodiment, the target wake-up signal is a frequency modulation signal.

As one embodiment, the target wake-up signal is a signal adopting OOK (On/Off Keying).

As one embodiment, the target wake-up signal is a signal adopting FSK (Frequency Shift Keying).

As one embodiment, the target wake-up signal is a signal adopting OOK and a constant envelop sequence.

As one embodiment, the target wake-up signal is a signal adopting FSK and a constant envelop sequence.

As one embodiment, the target wake-up signal is a signal for waking up a baseband processing function of a receiver.

As one embodiment, the target wake-up signal is a signal for waking up a complete baseband processing function of a receiver.

As one embodiment, the target wake-up signal is a signal for waking up the monitoring or reception of a PDCCH (Physical Downlink Control Channel).

As one embodiment, the target wake-up signal is a baseband signal or a radio frequency signal.

As one embodiment, the target wake-up signal is generated through OFDM.

As one embodiment, the target wake-up signal is used for reducing power consumption.

As one embodiment, the target wake-up signal is used in an RRC (Radio Resource Control) idle state or an RRC inactive state.

As one embodiment, the target wake-up signal can be used in an RRC (Radio Resource Control) idle state, an RRC inactive state and an RRC connected state.

As one embodiment, one bit block and a characteristic sequence together undergo OOK to be used for generating the target wake-up signal.

As one embodiment, one bit block and a characteristic sequence together undergo FSK to be used for generating the target wake-up signal.

As one embodiment, one bit block at least undergoes 1 or more of OOK modulation, transform precoding, mapping to physical resources, OFDM baseband signal generation, modulation and upconversion to generate the target wake-up signal.

As one embodiment, one bit block at least undergoes 1 or more of FSK modulation, transform precoding, mapping to physical resources, OFDM baseband signal generation, modulation and upconversion to generate the target wake-up signal.

As one embodiment, one bit block at least undergoes 1 or more of OOK modulation, sequence generation/modulation, transform precoding, mapping to physical resources, OFDM baseband signal generation, modulation and upconversion to generate the target wake-up signal.

As one embodiment, one bit block at least undergoes 1 or more of FSK modulation, sequence generation/modulation, transform precoding, mapping to physical resources, OFDM baseband signal generation, modulation and upconversion to generate the target wake-up signal.

As one embodiment, one bit block at least undergoes 1 or more of oversampling or spreading/extension or repetition, transform precoding, mapping to physical resources, OFDM baseband signal generation, modulation and upconversion to generate the target wake-up signal.

As one embodiment, one bit block at least undergoes 1 or more of oversampling or spreading/extension or repetition, sequence generation/modulation, transform precoding, mapping to physical resources, OFDM baseband signal generation, modulation and upconversion to generate the target wake-up signal.

As one embodiment, monitoring of the target wake-up signal is implemented at a radio frequency.

As one embodiment, monitoring of the target wake-up signal is implemented at an intermediate frequency.

As one embodiment, monitoring of the target wake-up signal is implemented at a baseband.

As one embodiment, monitoring of the target wake-up signal is implemented by envelop detection.

As one embodiment, monitoring of the target wake-up signal is implemented by correlation.

As one embodiment, monitoring of the target wake-up signal is implemented by energy detection.

As one embodiment, monitoring of the target wake-up signal is implemented by envelop detection and decoding.

As one embodiment, monitoring of the target wake-up signal is implemented by envelop detection and correlation.

As one embodiment, monitoring of the target wake-up signal is implemented by frequency modulation (FM) to amplitude modulation (AM) conversion and envelop detection.

As one embodiment, a monitoring manner of the target wake-up signal is related to the implementation.

As one embodiment, a receiver adopted by monitoring of the target wake-up signal is related to the implementation.

As one embodiment, monitoring of the target wake-up signal is related to the capability of the first node device.

As one embodiment, X1 is equal to 2.

As one embodiment, X1 is greater than 2.

As one embodiment, an upper limit value of the X1 is fixed.

As one embodiment, any one of the X1 configuration sets only comprises one configuration parameter value.

As one embodiment, any one of the X1 configuration sets comprises a plurality of configuration parameter values.

As one embodiment, any one of the X1 configuration sets is a value (or state) of one IE (information element).

As one embodiment, any one of the X1 configuration sets is a combination of values of a plurality of fields.

As one embodiment, any one of the X1 configuration sets is a combination of values of at least 1 field.

As one embodiment, any one of the X1 configuration sets is a value (or state) of one wake-up signal configuration IE.

As one embodiment, any one of the X1 configuration sets consists of values of all fields included in one IE.

As one embodiment, any configuration parameter value included in any one of the X1 configuration sets is a value of one field.

As one embodiment, the X1 configuration sets constitute one wake-up signal configuration list.

As one embodiment, any one of the X1 configuration sets is an element included in one list.

As one embodiment, any two of the X1 configuration sets are two configurations of the same IE.

As one embodiment, any two of the X1 configuration sets respectively consist of values of fields of respective two configurations of the same IE.

As one embodiment, any two of the X1 configuration sets are respective values (or states) of two identical IEs.

As one embodiment, any two of the X1 configuration sets are respective configurations of two identical IEs.

As one embodiment, any two of the X1 configuration sets respectively consist of values of fields respectively configured by two identical IEs.

As one embodiment, any two of the X1 configuration sets respectively comprise values of fields of two configurations of the same IE.

As one embodiment, any two of the X1 configuration sets respectively comprise values of fields of two configurations of the same IE.

As one embodiment, any two of the X1 configuration sets respectively consist of values of respective two configurations of a combination of respectively identical fields.

As one embodiment, configuration parameter values respectively included in any two of the X1 configuration sets are independently configured.

As one embodiment, any one of the X1 configuration sets consists of values of fields included in one wake-up signal configuration included in a wake-up signal configuration list.

As one embodiment, two configuration sets in the X1 configuration sets are respectively values (or states) of two different IEs.

As one embodiment, two configuration sets in the X1 configuration sets are respectively respective configurations of two different IEs.

As one embodiment, two configuration sets in the X1 configuration sets respectively comprise respective values of different fields.

As one embodiment, at least one of the X1 configuration sets comprises a value of a field of a frequency-domain resource used for configuring a wake-up signal.

As one embodiment, at least one of the X1 configuration sets comprises a value of a field of a time-domain resource used for configuring a wake-up signal.

As one embodiment, at least one of the X1 configuration sets comprises a value of a field of a sequence resource adopted for configuring a wake-up signal.

As one embodiment, at least one of the X1 configuration sets comprises a value of a field used for configuring a number of information bits carried by a wake-up signal.

As one embodiment, at least one of the X1 configuration sets comprises a value of a field used for configuring a format adopted by a wake-up signal.

As one embodiment, at least one of the X1 configuration sets comprises a value of a field used for configuring whether a wake-up signal is used for indicating monitoring of a PEI (Paging Early Indication).

As one embodiment, at least one of the X1 configuration sets comprises a value of a field used for configuring whether a wake-up signal is used for indicating monitoring of a PDCCH whose CRC is scrambled by a PS-RNTI.

As one embodiment, at least one of the X1 configuration sets comprises a value of a field used for configuring a generation manner of a wake-up signal.

As one embodiment, at least one of the X1 configuration sets comprises a value of a field used for configuring a type of a wake-up signal.

As one embodiment, at least one of the X1 configuration sets comprises a value of a field used for configuring a modulation manner (OOK or FSK) of a wake-up signal.

As one embodiment, the first occasion is a paging occasion (PO).

As one embodiment, the first occasion is a paging occasion associated with the first node device in the present application.

As one embodiment, the first occasion is a paging occasion associated with user equipment other than the first node device in the present application.

As one embodiment, the first occasion is a paging occasion associated with at least 1 piece of user equipment comprising the first node device in the present application.

As one embodiment, the first occasion is not a paging occasion associated with the first node device in the present application.

As one embodiment, the first occasion is a PEI occasion.

As one embodiment, the first occasion is a PS (Power Saving) PDCCH monitoring occasion.

As one embodiment, the first occasion is a monitoring occasion of a PDCCH whose CRC is scrambled by a PS-RNTI.

As one embodiment, the first occasion is a PEI occasion associated with the first node device in the present application.

As one embodiment, the first occasion is a PEI occasion associated with at least 1 piece of user equipment including the first node device in the present application.

As one embodiment, the first occasion comprises at least 1 PDCCH monitoring occasion.

As one embodiment, the first occasion comprises a plurality of slots in which paging DCI may be transmitted.

As one embodiment, the first occasion is a paging frame (PF).

As one embodiment, the first signaling is a PDCCH.

As one embodiment, the first signaling is a paging PDCCH.

As one embodiment, the first signaling comprises all or part of fields in a paging DCI format.

As one embodiment, the first signaling is a PDCCH whose CRC is scrambled by a P-RNTI.

As one embodiment, the first signaling is a PDCCH whose CRC is scrambled by a PEI-RNTI.

As one embodiment, the first signaling is a PDCCH whose CRC is scrambled by a PS-RNTI.

As one embodiment, the first signaling comprises all or part of fields in a DCI format 1_0.

As one embodiment, the first signaling comprises all or part of fields in a DCI format 2_6.

As one embodiment, the first signaling comprises all or part of fields in a DCI format 2_7.

As one embodiment, the first signaling carries high-layer information.

As one embodiment, the first signaling carries physical layer information.

As one embodiment, the first signaling carries core network information.

As one embodiment, the two expressions of "monitoring first signaling" and "receiving information carried by first signaling" are equivalent or may be used interchangeably.

As one embodiment, the two expressions of "monitoring first signaling" and "decoding first signaling" are equivalent or may be used interchangeably.

As one embodiment, the two expressions of "monitoring first signaling" and "blindly decoding first signaling" are equivalent or may be used interchangeably.

As one embodiment, the two expressions of "monitoring first signaling" and "performing decoding and CRC on first signaling" are equivalent or may be used interchangeably.

As one embodiment, the two expressions of "monitoring first signaling" and "performing decoding and CRC scrambled by an RNTI (Radio Network Temporary Identity) on first signaling" are equivalent or may be used interchangeably.

As one embodiment, the two expressions of "monitoring first signaling" and "decoding first signaling for one or more DCI (Downlink Control Information) format(s)" are equivalent or may be used interchangeably.

As one embodiment, the two expressions of "monitoring first signaling" and "decoding first signaling for one or more DCI payload size(s)" are equivalent or may be used interchangeably.

As one embodiment, the second information block comprises all or part of information bits carried by the target wake-up signal.

As one embodiment, the second information block is used for generating the target wake-up signal.

As one embodiment, the second information block is used for generating a modulation symbol of the target wake-up signal.

As one embodiment, a bit block carrying the second information block is used for generating the target wake-up signal.

As one embodiment, the second information block comprises high-layer information.

As one embodiment, the second information block comprises physical layer information.

As one embodiment, the second information block comprises information of a core network (CN).

As one embodiment, the second information block comprises information of a radio access network (RAN).

As one embodiment, the second information block is used for generating all or part of information bits carried by the target wake-up signal.

As one embodiment, the second information block comprises all or part of fields in an information format carried by the target wake-up signal.

As one embodiment, the second information block comprises an identifier of the first device group.

As one embodiment, the second information block comprises an identifier of the first node device.

As one embodiment, the second information block comprises RNTI configured for the first node device or a 5G-S-TMSI (SAE Temporary Mobile Station Identifier) of the first node device.

As one embodiment, the second information block comprises an identifier or index of one subgroup to which the first node device belongs.

As one embodiment, the technical feature "the second information block is used for determining whether to monitor the first signaling in the first occasion" comprises the following meaning: the second information block is used by the first node device in the present application for determining whether to monitor the first signaling in the first occasion.

As one embodiment, the technical feature "the second information block is used for determining whether to monitor the first signaling in the first occasion" comprises the following meaning: all or part included in the second information block is used for explicitly or implicitly indicating whether to monitor the first signaling in the first occasion.

As one embodiment, the technical feature "the second information block is used for determining whether to monitor the first signaling in the first occasion" comprises the following meaning: one field included in the second information block is used for explicitly or implicitly indicating whether to monitor the first signaling in the first occasion.

As one embodiment, the technical feature "the second information block is used for determining whether to monitor the first signaling in the first occasion" comprises the following meaning: one flag included in the second information block is used for explicitly or implicitly indicating whether to monitor the first signaling in the first occasion.

As one embodiment, the technical feature "the second information block is used for determining whether to monitor the first signaling in the first occasion" comprises the following meaning: the second information block is used for determining a target device group, the target device group comprises at least 1 piece of user equipment, and whether the first node device belongs to the target device group is used for determining whether to monitor the first signaling in the first occasion. As one dependent embodiment of the above embodiment, "whether the first node device belongs to the target device group is used for determining whether to monitor the first signaling in the first occasion" means: when the first node device belongs to the target device group, the first node device monitors the first signaling in the first occasion; otherwise, the first node device abandons monitoring the first signaling in the first occasion. As one dependent embodiment of the above embodiment, "whether the first node device belongs to the target device group is used for determining whether to monitor the first signaling in the first occasion" means: when the first node device belongs to the target device group, the first node device determines whether to monitor the first signaling in the first occasion according to PEI; otherwise, the first node device abandons monitoring the first signaling in the first occasion. As one dependent embodiment of the above embodiment, a grouping manner of the target device group is the same as a grouping manner of the first device group. As one dependent embodiment of the above embodiment, a grouping manner of the target device group is different from a grouping method of the first device group. As one dependent embodiment of the above embodiment, user equipment in a network is divided into G1 device groups, any one of the G1 device groups comprises at least 1 piece of user equipment, the G1 is a positive integer greater than 1, and the target device group is one of the G1 device groups. As one dependent embodiment of the above embodiment, user equipment in a network is divided into G1 device groups, any one of the G1 device groups comprises at least 1 piece of user equipment, the G1 is a positive integer greater than 1, the target device group is one of the G1 device groups, and the first device group is one of the G1 device groups. As one dependent embodiment of the above embodiment, user equipment in a network is divided into G1 device groups according to a first grouping manner, any one of the G1 device groups comprises at least 1 piece of user equipment, and the G1 is a positive integer greater than 1; the user equipment in the network is divided into G2 device groups according to a second grouping manner, any one of the G2 device groups comprises at least 1 piece of user equipment, and the G2 is a positive integer greater than 1; and the first grouping manner and the second grouping manner are different, the target device group is one of the G1 device groups, and the first device group is one of the G2 device groups.

As one embodiment, the target configuration set is any one of the X1 configuration sets.

As one embodiment, any configuration parameter value included in the target configuration set is used for configuring the target wake-up signal.

As one embodiment, any configuration parameter value included in the target configuration set is a configuration parameter value of the target wake-up signal.

As one embodiment, any configuration parameter value included in the target configuration set is a value of one field in the target configuration set.

As one embodiment, the target configuration set only comprises 1 configuration parameter value of the target wake-up signal.

As one embodiment, the target configuration set comprises a plurality of configuration parameter values of the target wake-up signal.

As one embodiment, any configuration parameter value included in the target configuration set is used for monitoring of the target wake-up signal.

As one embodiment, the target configuration set also comprises a configuration parameter value of a signal other than the target wake-up signal.

As one embodiment, a monitor of the target wake-up signal is the first node device.

As one embodiment, "a monitor of the target wake-up signal" and "the first node device" are equivalent or may be used interchangeably.

As one embodiment, a monitor of the target wake-up signal is one piece of user equipment included in the first device group.

As one embodiment, the first device group only comprises a monitor of the target wake-up signal.

As one embodiment, the first device group also comprises user equipment other than the monitor of the target wake-up signal.

As one embodiment, the first device group is configurable, or the first device group is predefined.

As one embodiment, user equipment included in the first device group is assigned by a core network.

As one embodiment, user equipment included in the first device group is determined according to the capability of the user equipment.

As one embodiment, the first device group is one subset (or subgroup) of a user equipment set (or user equipment group) corresponding to the same PO.

As one embodiment, the first device group is one subset (or subgroup) of a user equipment set (or user equipment group) that monitors the same PO.

As one embodiment, the first device group is one subset (or subgroup) of a user equipment set (or user equipment group) corresponding to the first occasion.

As one embodiment, the first device group is one subset (or subgroup) of a user equipment set (or user equipment group) that can monitor the first signaling in the first occasion.

As one embodiment, user equipment included in the first device group is determined according to a type of a wake-up signal receiver of the user equipment.

As one embodiment, user equipment included in the first device group is determined according to a type of the user equipment.

As one embodiment, user equipment included in the first device group is determined according to whether the user equipment has a subgroup ID assigned by a core network and whether the user equipment supports the core network to assign subgroups.

As one embodiment, user equipment included in the first device group is determined according to whether the user equipment has an index or identifier of at least 1 of the X1 configuration sets that is assigned by a core network, and whether the user equipment supports the core network to assign an index or identifier of at least 1 of the X1 configuration sets.

As one embodiment, all of the user equipment included in the first device group support a core network to assign subgroups.

As one embodiment, all of the user equipment included in the first device group support a core network to assign an index or identifier of at least 1 of the X1 configuration sets.

As one embodiment, all of the user equipment included in the first device group support a core network to assign subgroups and subgroup IDs assigned by the core network are all equal to one identical predefined value.

As one embodiment, all of the user equipment included in the first device group support a core network to assign an index or identifier of the target configuration set in the X1 configuration sets and the index or identifier of the target configuration set in the X1 configuration sets that is assigned by the core network is equal to one predefined value.

As one embodiment, all of the user equipment included in the first device group support a core network to assign subgroups and subgroup IDs assigned by the core network all belong to one identical predefined value range.

As one embodiment, all of the user equipment included in the first device group support a core network to assign an index or identifier of the target configuration set in the X1 configuration sets, and the index or identifier of the target configuration set in the X1 configuration sets that is assigned by the core network belongs to one predefined value range.

As one embodiment, all of the user equipment included in the first device group have the same or similar receiving capability of a wake-up signal.

As one embodiment, all of the user equipment included in the first device group adopt the same or similar receiver of a wake-up signal.

As one embodiment, all of the user equipment included in the first device group do not support a core network to assign subgroups.

As one embodiment, all of the user equipment included in the first device group do not support a core network to assign an index or identifier of any 1 of the X1 configuration sets.

As one embodiment, all of the user equipment included in the first device group do not support a core network to assign subgroups, or support the core network to assign subgroups but subgroup IDs assigned by the core network are all equal to one identical predefined value.

As one embodiment, all of the user equipment included in the first device group do not support a core network to assign an index or identifier of any 1 of the X1 configuration sets, or support the core network to assign an index or identifier of at least 1 of the X1 configuration sets but indexes or identifiers of configuration sets that are assigned by the core network are all equal to one identical predefined value.

As one embodiment, all of the user equipment included in the first device group do not support a core network to assign subgroups, or support the core network to assign subgroups but subgroup IDs assigned by the core network all belong to one identical predefined value range.

As one embodiment, all of the user equipment included in the first device group do not support the core network to assign an index or identifier of any 1 of the X1 configuration sets, or support the core network to assign an index or identifier of at least 1 of the X1 configuration sets but indexes or identifiers of configuration sets that are assigned by the core network all belong to one identical predefined value range.

As one embodiment, user equipment included in the first device group is determined according to an identifier of the user equipment.

As one embodiment, identifiers of all of the user equipment included in the first device group have the same remaining value for one configuration or predefined parameter.

As one embodiment, 5G-S-TMSI of all of the user equipment included in the first device group satisfies the following equation:

$$GroupID=(floor(5G\text{-}S\text{-}TMSI/(N*Ns)) \bmod GroupNum$$

wherein GroupID represents an identifier of the first device group, N represents a number of paging frames in a DRX cycle, Ns represents a number of paging occasions corresponding to one paging frame, and GroupNum represents a number of configured or predefined device groups.

As one embodiment, 5G-S-TMSI of all of the user equipment included in the first device group satisfies the following equation:

$$GroupID=(floor(5G\text{-}S\text{-}TMSI/(N*Ns)) \bmod GroupNum + Offset$$

wherein GroupID represents an identifier of the first device group, N represents a number of paging frames in a DRX cycle, Ns represents a number of paging occasions corresponding to one paging frame, GroupNum represents a number of configured or predefined device groups, and Offset represents a configurable or predefined offset value.

As one embodiment, "an identifier of the first device group" and "an index of the first device group" are equivalent or may be used interchangeably.

As one embodiment, "an identifier of the first device group" and "a configuration index of the first node device that is assigned by a core network" are equivalent or may be used interchangeably.

As one embodiment, "an identifier of the first device group" and "a subgroup index of the first node device that is assigned by a core network" are equivalent or may be used interchangeably.

As one embodiment, a number of identifiers of the first device group is a non-negative integer.

As one embodiment, an identifier of the first device group is assigned by a core network.

As one embodiment, an identifier of the first device group is an identifier or index of the target configuration set in the X1 configuration sets.

As one embodiment, a feature identifier value is equal to an identifier or index value of the target configuration set in the X1 configuration sets, each piece of user equipment included in the first device group is assigned the feature identifier value, and an identifier of the first device group is equal to the feature identifier value.

As one embodiment, an identifier of the first device group is equal to an equal identifier value respectively assigned to all of the user equipment included in the first device group.

As one embodiment, each piece of user equipment included in the first device group is assigned an equal identifier value, and an identifier of the first device group is equal to the equal identifier value assigned to any user equipment included in the first device group.

As one embodiment, an identifier of the first device group is obtained according to an identifier of user equipment included in the first device group.

As one embodiment, an identifier of the first device group is configured by signaling or is predefined.

As one embodiment, an identifier of the first device group is equal to an equal value obtained by the same mathematical operation on identifiers of all of the included user equipment.

As one embodiment, an identifier of the first device group is an index of the first device group in a plurality of device groups.

As one embodiment, when the first device group only comprises

As one embodiment, the time-domain position of the first occasion is an index of a slot to which the first occasion belongs.

As one embodiment, the time-domain position of the first occasion is an index of a frame to which the first occasion belongs.

As one embodiment, the time-domain position of the first occasion is an index of a DRX (discontinuous reception) cycle to which the first occasion belongs.

As one embodiment, the time-domain position of the first occasion is a sequence or index of the first occasion in a plurality of occasions to which the first occasion belongs.

As one embodiment, the time-domain position of the first occasion is a sequence or index of the first occasion in a plurality of occasions corresponding to the same one or more DRX cycles.

As one embodiment, the time-domain position of the first occasion is a sequence or index of the first occasion in a plurality of occasions corresponding to the same one or more paging frames.

As one embodiment, the time-domain position of the first occasion is a sequence or index of the first occasion in a plurality of occasions corresponding to the same one or more slots.

As one embodiment, the time-domain position of the first occasion is a sequence or index of the first occasion in a plurality of occasions corresponding to the same one time window.

As one embodiment, the time-domain position of the first occasion is a sequence or index of the first occasion in a plurality of occasions on a network side.

As one embodiment, the time-domain position of the first occasion is a sequence or index of the first occasion in a plurality of occasions associated with the first node device.

As one embodiment, the technical feature "at least one of an identifier of the first device group or a time-domain position of the first occasion is used for determining the target configuration set from the X1 configuration sets" comprises the following meaning: at least one of the identifier of the first device group or the time-domain position of the first occasion is used by the first node device in the present application for determining the target configuration set from the X1 configuration sets.

As one embodiment, the technical feature "at least one of an identifier of the first device group or a time-domain position of the first occasion is used for determining the target configuration set from the X1 configuration sets" comprises the following meaning: both the identifier of the first device group and the time-domain position of the first occasion are used for determining the target configuration set from the X1 configuration sets.

As one embodiment, the technical feature "at least one of an identifier of the first device group or a time-domain position of the first occasion is used for determining the target configuration set from the X1 configuration sets" comprises the following meaning: the identifier of the first device group is used for determining the target configuration set from the X1 configuration sets.

As one embodiment, the technical feature "at least one of an identifier of the first device group or a time-domain position of the first occasion is used for determining the target configuration set from the X1 configuration sets" comprises the following meaning: the time-domain position of the first occasion is used for determining the target configuration set from the X1 configuration sets.

As one embodiment, the technical feature "at least one of an identifier of the first device group or a time-domain position of the first occasion is used for determining the target configuration set from the X1 configuration sets" comprises the following meaning: a modulo value of the identifier of the first device group to the X1 is used for determining the target configuration set from the X1 configuration sets.

As one embodiment, the technical feature "at least one of an identifier of the first device group or a time-domain position of the first occasion is used for determining the target configuration set from the X1 configuration sets" comprises the following meaning: a modulo value of the time-domain position of the first occasion to the X1 is used for determining the target configuration set from the X1 configuration sets.

As one embodiment, the technical feature "at least one of an identifier of the first device group or a time-domain position of the first occasion is used for determining the target configuration set from the X1 configuration sets" comprises the following meaning: an index or identifier of the target configuration set in the X1 configuration sets is equal to a modulo value of the identifier of the first device group to the X1.

As one embodiment, the technical feature "at least one of an identifier of the first device group or a time-domain position of the first occasion is used for determining the target configuration set from the X1 configuration sets" comprises the following meaning: an index or identifier of the target configuration set in the X1 configuration sets is equal to a modulo value of the time-domain position of the first occasion to the X1.

As one embodiment, the technical feature "at least one of an identifier of the first device group or a time-domain position of the first occasion is used for determining the target configuration set from the X1 configuration sets" comprises the following meaning: at least one of the identifier of the first device group or the time-domain position of the first occasion is used for determining a first intermediate value, and a modulo value of the first intermediate value to the X1 is used for determining the target configuration set from the X1 configuration sets.

As one embodiment, the technical feature "at least one of an identifier of the first device group or a time-domain position of the first occasion is used for determining the target configuration set from the X1 configuration sets" comprises the following meaning: at least one of the identifier of the first device group or the time-domain position of the first occasion is used for determining the target configuration set from the X1 configuration sets according to a predefined mapping relationship or table relationship.

As one embodiment, the technical feature "at least one of an identifier of the first device group or a time-domain position of the first occasion is used for determining the target configuration set from the X1 configuration sets" comprises the following meaning: an index of the target configuration set in the X1 configuration sets is equal to a configuration set index assigned to the first node by a core network.

As one embodiment, the technical feature "at least one of an identifier of the first device group or a time-domain position of the first occasion is used for determining the target configuration set from the X1 configuration sets" comprises the following meaning: an index of the target configuration set in the X1 configuration sets is equal to an index of a subgroup assigned to the first node by the core network.

As one embodiment, the technical feature "at least one of an identifier of the first device group or a time-domain position of the first occasion is used for determining the target configuration set from the X1 configuration sets" comprises the following meaning: an index of the target configuration set in the X1 configuration sets is equal to the identifier of the first device group.

As one embodiment, the technical feature "at least one of an identifier of the first device group or a time-domain position of the first occasion is used for determining the target configuration set from the X1 configuration sets" comprises the following meaning: the identifier of the first device group is a configuration index assigned to the first node by a core network, and an index of the target configuration set in the X1 configuration sets is equal to the configuration index assigned to the first node by the core network.

As one embodiment, the technical feature "at least one of an identifier of the first device group or a time-domain position of the first occasion is used for determining the target configuration set from the X1 configuration sets" comprises the following meaning: when the first node device supports the core network to assign a configuration index (or identifier), the index of the target configuration set in the X1 configuration sets is equal to a configuration index (or identifier) assigned to the first node device by the core network; otherwise, the target configuration set is one predefined or fixed configuration set in the X1 configuration sets.

As one embodiment, the technical feature "at least one of an identifier of the first device group or a time-domain position of the first occasion is used for determining the target configuration set from the X1 configuration sets" comprises the following meaning: when the first node device supports a core network to assign a device group (or subgroup) identifier (or index), a device group (or subgroup) identifier (or index) assigned to the first node device by the core network is used for determining the target configuration set from the X1 configuration sets; otherwise, the target configuration set is one predefined or fixed configuration set in the X1 configuration sets.

As one embodiment, the technical feature "at least one of an identifier of the first device group or a time-domain position of the first occasion is used for determining the target configuration set from the X1 configuration sets" comprises the following meaning: when the first node device supports a core network to assign a device group (or subgroup) identifier (or index), a modulo value of a device group (or subgroup) identifier (or index) assigned to the first node device by the core network to the X1 is used for determining the target configuration set from the X1 configuration sets; otherwise, the target configuration set is one predefined or fixed configuration set in the X1 configuration sets.

As one embodiment, the technical feature "at least one of an identifier of the first device group or a time-domain position of the first occasion is used for determining the target configuration set from the X1 configuration sets" comprises the following meaning: a modulo value of a sum of the identifier of the first device group and the time-domain position of the first occasion to the X1 is used for determining the target configuration set from the X1 configuration sets.

As one embodiment, the technical feature "at least one of an identifier of the first device group or a time-domain position of the first occasion is used for determining the target configuration set from the X1 configuration sets" comprises the following meaning: the first occasion belongs to a first occasion group, the first occasion group is one of the X1 occasion groups, and any one of the X1 occasion groups comprises at least one occasion; and the X1 occasion groups correspond to the X1 configuration sets one by one, and the target configuration set is a configuration set corresponding to the first occasion group.

As one embodiment, the time-frequency position of the target wake-up signal is also used for determining the target configuration set from the X1 configuration sets.

As one embodiment, a plurality of wake-up signals are associated with the first occasion, the target wake-up signal is one of the plurality of wake-up signals, and the position (or index) of the target wake-up signal in the plurality of wake-up signals is also used for determining the target configuration set from the X1 configuration sets.

As one embodiment, X1 wake-up signals are associated with the first occasion, the target wake-up signal is one of the X1 wake-up signals, the X1 wake-up signals correspond to the X1 configuration sets one by one, and the target configuration set is a configuration set corresponding to the target wake-up signal in the X1 configuration sets.

As one embodiment, an identifier of a monitor of the target wake-up signal is a TMSI of the monitor of the target wake-up signal.

As one embodiment, an identifier of a monitor of the target wake-up signal is a 5G-S-TMSI of the monitor of the target wake-up signal.

As one embodiment, an identifier of a monitor of the target wake-up signal is one RNTI of the monitor of the target wake-up signal.

As one embodiment, an identifier of a monitor of the target wake-up signal is one ID assigned to the monitor of the target wake-up signal.

As one embodiment, an identifier of a monitor of the target wake-up signal is an IMSI (International Mobile Subscriber Identity) of the monitor of the target wake-up signal.

As one embodiment, the technical feature "an identifier of a monitor of the target wake-up signal is used for determining the first occasion" comprises the following meaning: the identifier of the monitor of the target wake-up signal is used by the first node device in the present application for determining the first occasion.

As one embodiment, the technical feature "an identifier of a monitor of the target wake-up signal is used for determining the first occasion" comprises the following meaning: the identifier of the monitor of the target wake-up signal is used for determining the first occasion according to a predefined operation rule.

As one embodiment, the technical feature "an identifier of a monitor of the target wake-up signal is used for determining the first occasion" comprises the following meaning: the identifier of the monitor of the target wake-up signal is used for determining a paging occasion (PO) associated with the first occasion.

As one embodiment, the technical feature "an identifier of a monitor of the target wake-up signal is used for determining the first occasion" comprises the following meaning: the identifier of the monitor of the target wake-up signal is used for determining a paging frame (PF) associated with the first occasion.

As one embodiment, the technical feature "an identifier of a monitor of the target wake-up signal is used for determining the first occasion" comprises the following meaning: the identifier of the monitor of the target wake-up signal is used for determining a paging occasion (PO) associated with the first occasion, and the paging occasion associated with the first occasion and a configurable or predefined time domain offset are together used for determining the first occasion.

As one embodiment, the technical feature "an identifier of a monitor of the target wake-up signal is used for determining the first occasion" comprises: a relationship in the following equation is satisfied:

$$(SFN + PF\_offset) \bmod T = (T \operatorname{div} N)*(UE\_ID \bmod N)$$

wherein SFN represents a PF including the first occasion or including a starting point of the first occasion, UE_ID represents an identifier of the monitor of the target wake-up signal, T represents a DRX cycle, N represents a number of PFs in the DRX cycle, and PF_offset represents a predefined or configured offset value.

As one embodiment, the technical feature "an identifier of a monitor of the target wake-up signal is used for determining the first occasion" comprises: a relationship in the following equation is satisfied:

$$i\_s = floor\ (UE\_ID/N) \bmod Ns$$

wherein i_s represents an index of the first occasion, UE_ID represents an identifier of the monitor of the target wake-up signal, N represents a number of PFs in a DRX cycle, and Ns is a number of POs for one PF.

As one embodiment, the technical feature "an identifier of a monitor of the target wake-up signal is used for determining the first occasion" comprises the following meaning: the first occasion is a PDCCH monitoring occasion, and the identifier of the monitor of the target wake-up signal is used for determining an index and/or type of a search space set to which the first occasion belongs.

As one embodiment, the first information block is used for determining a time-domain position relationship between a time-domain resource occupied by the target wake-up signal and the first occasion.

As one embodiment, an information block other than the first information block is used for determining a time-domain position relationship between a time-domain resource occupied by the target wake-up signal and the first occasion.

As one embodiment, the first information block is used for determining a number of device groups associated with the first occasion.

As one embodiment, an information block other than the first information block is used for determining a number of device groups associated with the first occasion.

**Embodiment 2**

Embodiment 2 illustrates a schematic diagram of one network architecture according to the present application, as shown in FIG. 2. FIG. 2 illustrates a diagram of a network architecture 200 of 5G NR, LTE (Long-Term Evolution) and LTE-A (Long-Term Evolution Advanced) systems. The 5G NR or LTE network architecture 200 may be referred to as 5GS (5G System)/EPS (Evolved Packet System) 200 or some other suitable terminologies. The 5GS/EPS 200 may comprise one or more pieces of UE (User Equipment) 201, an NG-RAN (Next Generation Radio Access Network) 202, a 5GC (5G Core Network)/EPC (Evolved Packet Core) 210, an HSS (Home Subscriber Server)/UDM (Unified Data Management) 220, and an Internet service 230. The 5GS/EPS may be interconnected with other access networks, but these entities/interfaces are not shown for simplicity. As shown, the 5GS/EPS provides packet switching services, but those skilled in the art will readily appreciate that the various concepts presented throughout the present application may be extended to networks that provide circuit switching services or other cellular networks. The NG-RAN comprises an NR/Evolved Node B (gNB/eNB) 203 and other gNB(eNB)204. The gNB(eNB)203 provides user and control plane protocol termination towards the UE201. The gNB(eNB)203 may be connected to the other gNB(eNB)204 via an Xn/X2 interface (e.g., backhaul). The gNB(eNB)203 may also be referred to as a base station, a base transceiving station, a radio base station, a radio transceiving device, a transceiving device function, a basic service set (BSS), an extended service set (ESS), a TRP (Transmitter Receiver Point), or some other suitable terminologies. The gNB(eNB)203 provides an access point to the 5GC/EPC210 for the UE201. Examples of the UE201 comprise a cellular phone, a smart phone, a session initiation protocol (SIP) phone, a laptop computer, a personal digital assistant (PDA), a satellite radio, non-terrestrial base station communication, satellite mobile communication, a global positioning system, a multimedia apparatus, a video apparatus, a digital audio player (e.g., an MP3 player), a camera, a game console, a drone, an aircraft, a narrowband Internet of Things device, a machine type communication device, a land vehicle, an automobile, a wearable device, or any other similarly functional apparatuses. Those skilled in the art may also refer to the UE201 as a mobile station, a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or some other suitable terminology. The gNB(eNB)203 is connected to the 5GC/EPC210 via an S1/NG interface. The 5GC/EPC210 comprises an MME (Mobility Management Entity)/AMF (Authentication Management Field)/SMF (Session Management Function) 211, an other MME/AMF/SMF214, an S-GW (Service Gateway)/UPF (User Plane Function) 212, and a P-GW (Packet Data Network Gateway)/UPF213. The MME/AMF/SMF211 is a control node that processes signaling between the UE201 and the 5GC/EPC210. Generally, the MME/AMF/SMF211 provides bearer and connection management. All user IP (Internet Protocol) packets are transmitted through the S-GW/UPF212, and the S-GW/UPF212 is itself connected to the P-GW/UPF213. The P-GW provides UE IP address allocation and other functions. The P-GW/UPF213 is connected to the Internet service 230. The Internet service 230 comprises Internet protocol services corresponding to operators, which may specifically comprise the Internet, an intranet, an IMS (IP Multimedia Subsystem), and a packet switching streaming service.

As one embodiment, the UE201 corresponds to the first node device in the present application.

As one embodiment, the gNB(eNB)201 corresponds to the second node device in the present application.

## Embodiment 3

Embodiment 3 shows a schematic diagram of an embodiment of a radio protocol architecture for a user plane and a control plane according to the present application, as shown in FIG. 3. FIG. 3 is a schematic diagram illustrating an embodiment of a radio protocol architecture for a user plane 350 and a control plane 300. FIG. 3 shows the radio protocol architecture for the control plane 300 for a first node device (UE or a gNB) and a second node device (a gNB or UE) using three layers: Layer 1, Layer 2, and Layer 3. The Layer 1 (L1 layer) is the lowest layer and implements various PHY (physical layer) signal processing functions. The L1 layer will be referred to as a PHY301 herein. The layer 2 (L2 layer) 305 is above the PHY301 and is responsible for a link between the first node device and the second node device through the PHY301. The L2 layer 305 comprises a MAC (Medium Access Control) sublayer 302, an RLC (Radio Link Control) sublayer 303, and a PDCP (Packet Data Convergence Protocol) sublayer 304, which are terminated at the second node device. The PDCP sublayer 304 provides multiplexing between different radio bearers and logical channels. The PDCP sublayer 304 also provides security by encrypting data packets, and provides inter-cell mobility support of the first node device between the second node devices. The RLC sublayer 303 provides segmentation and reassembly of upper-layer data packets, retransmission of lost data packets, and reordering of data packets to compensate for out-of-order reception due to an HARQ. The MAC sublayer 302 provides multiplexing between logical and transport channels. The MAC sublayer 302 is also responsible for allocating various radio resources (e.g., resource blocks) in one cell between the first node devices. The MAC sublayer 302 is also responsible for HARQ operations. The RRC (Radio Resource Control) sublayer 306 in the layer 3 (L3 layer) in the control plane 300 is responsible for obtaining radio resources (i.e., radio bearers) and configuring lower layers using an RRC signaling between the second node device and the first node device. The radio protocol architecture for the user plane 350 comprises a layer 1 (L1 layer) and a layer 2 (L2 layer). The radio protocol architecture for the first node device and the second node device in the user plane 350 is substantially the same as the corresponding layers and sublayers in the control plane 300 for a physical layer 351, a PDCP sublayer 354 in the L2 layer 355, an RLC sublayer 353 in the L2 layer 355, and a MAC sublayer 352 in the L2 layer 355, but the PDCP sublayer 354 also provides header compression for upper layer data packets to reduce radio transmission overhead. The L2 layer 355 in the user plane 350 also comprises an SDAP (Service Data Adaptation Protocol) sublayer 356, and the SDAP sublayer 356 is responsible for mapping between QoS flows and data radio bearers (DRBs) to support the diversity of services. Although not shown, the first node device may have several upper layers above the L2 layer 355, comprising a network layer (e.g., an IP layer) terminated at the P-GW on the network side and an application layer terminated at the other end of the connection (e.g., remote UE, and a server).

As one embodiment, the radio protocol architecture in FIG. 3 is applicable to the first node device in the present application.

As one embodiment, the radio protocol architecture in FIG. 3 is applicable to the second node device in the present application.

## Embodiment 4

Embodiment 4 shows a schematic diagram of a first node device and a second node device according to one embodiment of the present application, as shown in FIG. 4.

The first node device (450) may comprise a controller/processor 490, a data source/cache 480, a receiving processor 452, a transmitting device/receiving device 456 and a transmitting processor 455, and the transmitting device/receiving device 456 comprises an antenna 460.

The second node device (410) may comprise a controller/processor 440, a data source/cache 430, a receiving processor 412, a transmitting device/receiving device 416 and a transmitting processor 415, and the transmitting device/receiving device 416 comprises an antenna 420.

In a DL (Downlink), an upper-layer packet, such as high-layer information included in a first information block in the present application, high-layer information included in a second information block (if the second information block comprises the high-layer information) and high-layer information included in first signaling (if the first signaling comprises the high-layer information), is provided to the controller/processor 440. The controller/processor 440 implements the functions of the L2 layer and above. In the DL, the controller/processor 440 provides packet header compression, encryption, packet segmentation and reordering, multiplexing between logical and transport channels, and radio resource allocation to the first node device 450 based on various priority metrics. The controller/processor 440 is also responsible for HARQ operations, retransmission of lost packets, and signaling to the first node device 450, such as the generation of the high-layer information included in the first information block in the present application, high-layer information included in the second information block (if the second information block comprises the high-layer information) and high-layer information included in first signaling (if the first signaling comprises the high-layer information) in the controller/processor 440. The transmitting processor 415 implements various signal processing functions for the L1 layer (i.e., physical layer), comprising coding, interleaving, scrambling, modulation, power control/allocation, precoding, and physical layer control signaling generation, etc., for example, the generation of a physical layer signal carrying the first information block in the present application, a physical layer signal of a target wake-up signal, and a physical layer signal corresponding to first signaling is completed in the transmitting processor 415. The generated modulation symbols are divided into parallel streams and each stream is mapped to a corresponding multi-carrier subcarrier and/or multi-carrier symbol, and then mapped by the transmitting processor 415 to the antenna 420 via the transmitting device 416 and transmitted in the form of a radio frequency signal. At the receiving end, each receiving device 456 receives the radio frequency signal through the corresponding antenna 460 thereof, and each receiving device 456 recovers the baseband information modulated onto the radio frequency carrier and provides the baseband information to the receiving processor 452. The receiving processor 452 implements various signal receiving processing functions of the L1 layer. The signal receiving processing functions comprise monitoring the physical layer signal carrying the first information block in the present application, a target wake-up signal, and first signaling, performing demodulation based on various modulation solutions (e.g., binary phase shift keying (BPSK), and quadrature phase shift keying (QPSK)) through multi-carrier symbols in a multi-carrier symbol stream, and then descrambling, decoding and deinterleaving to recover data or control transmitted by the second node device 410 on a physical channel, and then providing the data and a control signal to the controller/processor 490. The controller/-processor 490 is responsible for the L2 layer and upper layers, and the controller/processor 490 interprets the high-layer information included in the first information block in the present application, high-layer information included in the second information block (if the second information block comprises the high-layer information) and high-layer information included in first signaling (if the first signaling comprises the high-layer information). The controller/processor may be associated with the memory 480 which stores program codes and data. The memory 480 may be referred to as a computer-readable medium.

In an uplink (UL) transmission, similar to a downlink transmission, high-layer information, comprising high-layer information included in a third information block in the present application, is generated at the controller/processor 490 and then is implemented by the transmitting processor 455 for various signal transmission processing functions for the L1 layer (i.e., physical layer), comprising that the generation of the physical layer signal carrying the third information block is completed at the transmitting processor 455, and then the physical layer signal is mapped by the transmitting processor 455 to the antenna 460 via the transmitting device 456 to be transmitted out in the form of a radio frequency signal. The receiving device 416 receives the radio frequency signal through the corresponding antenna 420 thereof, and each receiving device 416 recovers the baseband information modulated onto the radio frequency carrier and provides the baseband information to the receiving processor 412. The receiving processor 412 implements various signal receiving processing functions for the L1 layer (i.e., physical layer), comprising receiving and processing the physical layer signal carrying the third information block, and then providing data and/or a control signal to the controller/processor 440. The function of implementing the L2 layer at the controller/processor 440 comprises interpreting the high-layer information, comprising interpreting the high-layer information carried by the third information block. The controller/processor may be associated with a cache 430 which stores program codes and data. The cache 430 may be a computer-readable medium.

As one embodiment, the first node device 450 apparatus comprises: at least one processor and at least one memory, the at least one memory comprising computer program codes; the at least one memory and the computer program codes are configured to be used together with the at least one processor, and the first node device 450 apparatus at least: receives a first information block and monitors a target wake-up signal, wherein the first information block is used for determining X1 configuration sets, any one of the X1 configuration sets comprises at least 1 configuration parameter value, and the X1 is a positive integer greater than 1; and determines whether to monitor first signaling in a first occasion, wherein the target wake-up signal carries a second information block, and the second information block is used for determining whether to monitor the first signaling in the first occasion; a target configuration set is one of the X1 configuration sets, and the target configuration set comprises at least 1 configuration parameter value of the target wake-up signal; a monitor of the target wake-up signal belongs to a first device group, and the first device group comprises at least 1 piece of user equipment; and at least one of an identifier of the first device group or the time-domain position of the first occasion is used for determining the target configuration set from the X1 configuration sets, and an identifier of the monitor of the target wake-up signal is used for determining the first occasion.

As one embodiment, the first node device 450 apparatus comprises: a memory storing a computer-readable instruction program, wherein the computer-readable instruction program, when executed by at least one processor, generates an action, and the action comprises: receiving a first information block and monitoring a target wake-up signal, wherein the first information block is used for determining X1 configuration sets, any one of the X1 configuration sets comprises at least 1 configuration parameter value, and the X1 is a positive integer greater than 1; and determining whether to monitor first signaling in a first occasion, wherein the target wake-up signal carries a second information block, and the second information block is used for determining whether to monitor the first signaling in the first occasion; a target configuration set is one of the X1 configuration sets, and the target configuration set comprises at least 1 configuration parameter value of the target wake-up signal; a monitor of the target wake-up signal belongs to a first device group, and the first device group comprises at least 1 piece of user equipment; and at least one of an identifier of the first device group or the time-domain position of the first occasion is used for determining the target configuration set from the X1 configuration sets, and an identifier of the monitor of the target wake-up signal is used for determining the first occasion.

As one embodiment, the second node device 410 apparatus comprises: at least one processor and at least one memory, the at least one memory comprising computer program codes; and the at least one memory and the computer program codes are configured to be used together with the at least one processor. The second node device 410 apparatus at least: receives a first information block and transmits a target wake-up signal, wherein the first information block is used for determining X1 configuration sets, any one of the X1 configuration sets comprises at least 1 configuration parameter value, and the X1 is a positive integer greater than 1; and transmitting first signaling in a first occasion, wherein the target wake-up signal carries a second information block, and the second information block is used for determining whether to monitor the first signaling in the first occasion; a target configuration set is one of the X1 configuration sets, and the target configuration set comprises at least 1 configuration parameter value of the target wake-up signal; a monitor of the target wake-up signal belongs to a first device group, and the first device group comprises at least 1 piece of user equipment; and at least one of an identifier of the first device group or the time-domain position of the first occasion is used for determining the target configuration set from the X1 configuration sets, and an identifier of the monitor of the target wake-up signal is used for determining the first occasion.

As one embodiment, the second node device 410 comprises: a memory storing a computer-readable instruction program, wherein the computer-readable instruction program, when executed by at least one processor, generates an action, and the action comprises: receiving a first information block and transmitting a target wake-up signal, the first information block is used for determining X1 configuration sets, any one of the X1 configuration sets comprises at least 1 configuration parameter value, and the X1 is a positive integer greater than 1; and transmitting first signaling in a first occasion, wherein the target wake-up signal carries a second information block, and the second information block is used for determining whether to monitor the first signaling in the first occasion; a target configuration set is one of the X1 configuration sets, and the target configuration set comprises at least 1 configuration parameter value of the target wake-up signal; a monitor of the target wake-up signal belongs to a first device group, and the first device group comprises at least 1 piece of user equipment; and at least one of an identifier of the first device group or the time-domain position of the first occasion is used for determining the target configuration set from the X1 configuration sets, and an identifier of the monitor of the target wake-up signal is used for determining the first occasion.

As one embodiment, the first node device 450 is one piece of user equipment (UE).

As one embodiment, the second node device 410 is one base station device (gNB/eNB).

As one embodiment, the receiving device 456 (comprising the antenna 460), the receiving processor 452 and the controller/processor 490 are used for receiving the first information block in the present application.

As one embodiment, the receiving device 456 (comprising the antenna 460) is used for monitoring the target wake-up signal in the present application.

As one embodiment, the receiving device 456 (comprising the antenna 460), the receiving processor 452 and the controller/processor 490 are used for monitoring the first signaling in the present application.

As one embodiment, the transmitting device 456 (comprising the antenna 460), the transmitting processor 455 and the controller/processor 490 are used for transmitting the third information block in the present application.

As one embodiment, the transmitting device 416 (comprising the antenna 420), the transmitting processor 415 and the controller/processor 440 are used for transmitting the first information block in the present application.

As one embodiment, the transmitting device 416 (comprising the antenna 420) is used for transmitting the target wake-up signal.

As one embodiment, the transmitting device 416 (comprising the antenna 420), the transmitting processor 415 and the controller/processor 440 are used for transmitting the first signaling in the present application.

As one embodiment, the receiving device 416 (comprising the antenna 420), the receiving processor 412 and the controller/processor 440 are used for receiving the third information block in the present application.

## Embodiment 5

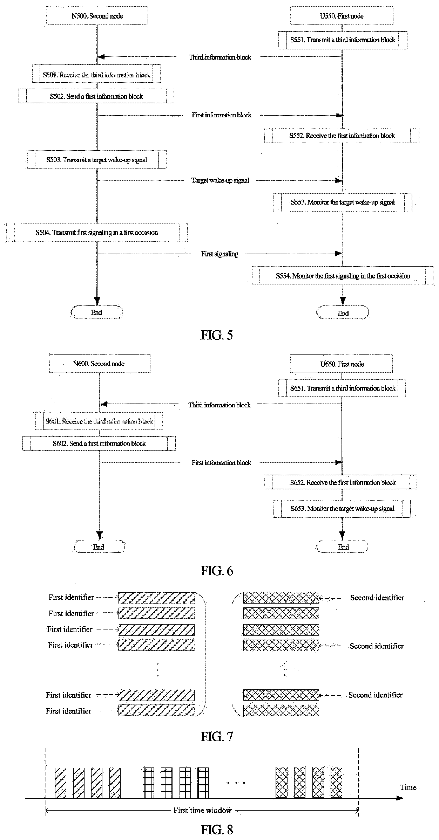

Embodiment 5 illustrates a flowchart of a wireless signal transmission according to one embodiment of the present application, as shown in FIG. 5. In FIG. 5, a second node device N500 is a maintenance base station of a servicing cell of a first node device U550. It should be particularly noted that the order in this example does not limit the signal transmission order and implementation order in the present application.

For **the second node device N500,** a third information block is received in step S501, a first information block is transmitted in step S502, a target wake-up signal is transmitted in step S503, and first signaling is transmitted in a first occasion in step S504.

For **the first node device U550,** a third information block is transmitted in step S551, a first information block is received in step S552, a target wake-up signal is monitored in step S553, and first signaling is monitored in a first occasion in step S554.

In Embodiment 5, the first information block is used for determining X1 configuration sets, any one of the X1 configuration sets comprises at least 1 configuration parameter value, and the X1 is a positive integer greater than 1; the target wake-up signal carries a second information block, and the second information block is used for determining whether to monitor the first signaling in the first occasion; a target configuration set is one of the X1 configuration sets, and the target configuration set comprises at least 1 configuration parameter value of the target wake-up signal; a monitor of the target wake-up signal belongs to a first device group, and the first device group comprises at least 1 piece of user equipment; at least one of an identifier of the first device group or a time-domain position of the first occasion is used for determining the target configuration set from the X1 configuration sets, and an identifier of a monitor of the target wake-up signal is used for determining the first occasion; and the third information block is used for indicating at least 1 band, and the monitor of the target wake-up signal supports the reception of a wake-up signal on each band indicated by the third information block.

As one embodiment, the third information block is used for indicating the capability of the first node device.

As one embodiment, the third information block is transmitted via an air interface or a wireless interface.

As one embodiment, the third information block is also delivered via an X2 interface, Xn interface or NG interface.

As one embodiment, the third information block is also delivered between network nodes.

As one embodiment, the third information block is received by a network node through an RAN interface, and then is also delivered to another network node or is delivered to a core network.

As one embodiment, the third information block is received by a network node through a Uu interface, and then is also delivered to another network node or is delivered to a core network.

As one embodiment, the third information block comprises all or part of high-layer signaling or physical layer signaling.

As one embodiment, the third information block is earlier than the first information block.

As one embodiment, the third information block is later than the first information block.

As one embodiment, the third information block is earlier than the target wake-up signal.

As one embodiment, the third information block is later than the target wake-up signal.

As one embodiment, the third information block comprises all or part of RRC signaling, or the third information block comprises all or part of MAC layer signaling.

As one embodiment, the third information block is transmitted via a PUSCH or a PUCCH (Physical Uplink Control Channel).

As one embodiment, the third information block is per UE, or the third information block is per feature set, or the third information block is per band, or the third information block is per band combination, or the third information block is per band list, or the third information block is per frequency range, or the third information block is per duplex mode.

As one embodiment, the third information block is related to a frequency range.

As one embodiment, the third information block is related to a duplex mode (TDD or FDD).

As one embodiment, the third information block comprises all or part of "UE-RadioPagingInfo".

As one embodiment, the third information block comprises all or part of "UERadioPagingInformation".

As one embodiment, the third information block comprises all or part of "UE-NR-Capability-v1900".

As one embodiment, the third information block comprises all or part of "LPWUS-Parameters-v1900".

As one embodiment, the third information block comprises all or part of "lpwus-SubgroupingSupportBandList-r19".

As one embodiment, the third information block is used for indicating the UE capability required by paging.

As one embodiment, the technical feature "the third information block is used for indicating at least 1 band" comprises the following meaning: all or part included in the third information block is used by the first node device in the present application for explicitly or implicitly indicating at least 1 band.

As one embodiment, the technical feature "the third information block is used for indicating at least 1 band" comprises the following meaning: all or part included in the third information block is used by the second node device in the present application for explicitly or implicitly indicating at least 1 band.

As one embodiment, the technical feature "the third information block is used for indicating at least 1 band" comprises the following meaning: all or part included in the third information block is used by the first node device in the present application for explicitly or implicitly indicating at least 1 band to the second node device in the present application.

As one embodiment, the technical feature "the third information block is used for indicating at least 1 band" comprises the following meaning: all or part included in the third information block is used by the second node device in the present application for explicitly or implicitly indicating at least 1 band to another network node or a core network.

As one embodiment, the technical feature "the third information block is used for indicating at least 1 band" comprises the following meaning: all or part included in the third information block is used by the second node device in the present application for explicitly or implicitly indicating at least 1 band to another network node or a core network.

As one embodiment, the technical feature "the third information block is used for indicating at least 1 band" comprises the following meaning: the third information block is used for indicating one band list.

As one embodiment, the technical feature "the third information block is used for indicating at least 1 band" comprises the following meaning: the third information block is used for indicating a band that supports monitoring (or receiving) a wake-up signal.

As one embodiment, the number of bands indicated by the third information block is not greater than 1024.

As one embodiment, the third information block is also used for indicating a receiver parameter value supported by the first node device.

As one embodiment, the third information block is also used for indicating a receiver type supported by the first node device.

As one embodiment, the third information block is also used for indicating a reception parameter value of a wake-up signal supported by the first node device.

As one embodiment, the third information block is also used for indicating at least 1 configuration parameter value of a wake-up signal supported by the first node device.

As one embodiment, the technical feature "the monitor of the target wake-up signal supports the reception of a wake-up signal on each band indicated by the third information block" comprises the following meaning: the monitor of the target wake-up signal has the capability to monitor (or receive) the wake-up signal on each band indicated by the third information block.

As one embodiment, the technical feature "the monitor of the target wake-up signal supports the reception of a wake-up signal on each band indicated by the third information block" comprises the following meaning: the monitor of the target wake-up signal supports the reception of a signal or indication used for paging wake-up on each band indicated by the third information block.

As one embodiment, the technical feature "the monitor of the target wake-up signal supports the reception of a wake-up signal on each band indicated by the third information block" comprises the following meaning: the monitor of the target wake-up signal supports the reception of a signal or indication used for DRX wake-up on each band indicated by the third information block.

As one embodiment, the technical feature "the monitor of the target wake-up signal supports the reception of a wake-up signal on each band indicated by the third information block" comprises the following meaning: the monitor of the target wake-up signal supports the wake-up for paging on each band indicated by the third information block.

As one embodiment, the technical feature "the monitor of the target wake-up signal supports the reception of a wake-up signal on each band indicated by the third information block" comprises the following meaning: the monitor of the target wake-up signal supports an advance indication for paging on each band indicated by the third information block.

As one embodiment, the monitor of the target wake-up signal supports the reception of a wake-up signal having 1 or more given configuration parameter values on each band indicated by the third information block.

As one embodiment, the monitor of the target wake-up signal supports the reception of a wake-up signal on each band indicated by the third information block and supports a given wake-up signal receiver type.

As one embodiment, the monitor of the target wake-up signal supports the reception of a wake-up signal on each band indicated by the third information block and supports a given wake-up signal receiver capability.

As one embodiment, the monitor of the target wake-up signal supports the reception of a wake-up signal on each band indicated by the third information block and supports a given wake-up signal receiver parameter value.

As one embodiment, the third information block is also used for indicating that the monitor of the target wake-up signal supports X1 configuration sets.

As one embodiment, the third information block is also used for indicating that the monitor of the target wake-up signal supports a plurality of configuration sets for a wake-up signal.

As one embodiment, the third information block is also used for indicating that a monitor of the target wake-up signal supports grouping (or sub-grouping) of user equipment.

As one embodiment, a monitor of the target wake-up signal supports, on each band indicated by the third information block, 1 of {reception (or monitoring) of a wake-up signal, reception (or monitoring) of a wake-up signal having 1 or more given configuration parameter values, grouping (or sub-grouping) of user equipment, and supporting a plurality of configuration sets for a wake-up signal}, or a combination of any multiple ones of them.

## Embodiment 6

Embodiment 6 illustrates another flowchart of a wireless signal transmission according to one embodiment of the present application, as shown in FIG. 6. In FIG. 6, a second node device N600 is a maintenance base station of a servicing cell of a first node device U650. It should be particularly noted that the order in this example does not limit the signal transmission order and implementation order in the present application.

For **the second node device N600,** a third information block is received in step S601, and a first information block is transmitted in step S602.

For **the first node device U650,** the third information block is transmitted in step S651, the first information block is received in step S652, and a target wake-up signal is monitored in step S653.

In Embodiment 6, the first information block is used for determining X1 configuration sets, any one of the X1 configuration sets comprises at least 1 configuration parameter value, and the X1 is a positive integer greater than 1; the target wake-up signal carries a second information block, and the second information block is used for determining whether to monitor first signaling in a first occasion; a target configuration set is one of the X1 configuration sets, and the target configuration set comprises at least 1 configuration parameter value of the target wake-up signal; a monitor of the target wake-up signal belongs to a first device group, and the first device group comprises at least 1 piece of user equipment; at least one of an identifier of the first device group or a time-domain position of the first occasion is used for determining the target configuration set from the X1 configuration sets, and an identifier of a monitor of the target wake-up signal is used for determining the first occasion; and the third information block is used for indicating at least 1 band, and the monitor of the target wake-up signal supports the reception of a wake-up signal on each band indicated by the third information block.

## Embodiment 7

Embodiment 7 illustrates a schematic diagram of a first identifier and a second identifier according to one embodiment of the present application, as shown in FIG. 7. In FIG. 7, each rectangle filled with oblique lines represents one piece of user equipment included in a device group corresponding to the first identifier, each rectangle filled with intersected lines represents one piece of user equipment included in a device group corresponding to the second identifier, and a dotted line with an arrow represents that a corresponding identifier is assigned.

In Embodiment 7, the first device group in the present application is one of X2 device groups, X2 identifiers respectively correspond to the X2 device groups, any one of the X2 device groups comprises at least 1 piece of user equipment, and the X2 is a positive integer greater than 1; and a first identifier and a second identifier are respectively two different identifiers in the X2 identifiers, one piece of user equipment included in the device group corresponding to the first identifier in the X2 device groups is assigned the first identifier, and one piece of user equipment included in the device group corresponding to the second identifier in the X2 device groups is not assigned an identifier or is assigned the second identifier.

As one embodiment, the X2 is equal to the X1.

As one embodiment, the X2 is greater than the X1.

As one embodiment, the X2 is smaller than the X1.

As one embodiment, X2 is equal to 2.

As one embodiment, X2 is greater than 2.

As one embodiment, the X2 is configurable or predefined.

As one embodiment, the X2 device groups are configurable or predefined.

As one embodiment, the first information block is used for determining the X2 device groups.

As one embodiment, an information block other than the first information block is used for determining the X2 device groups.

As one embodiment, any one of the X2 device groups is a subgroup.

As one embodiment, any one of the X2 device groups is a subgroup configured by IE "subgroupConfig".

As one embodiment, any one of the X2 device groups is a PEI subgroup.

As one embodiment, one of the X2 device groups is a subgroup assigned by a core network.

As one embodiment, any one of the X2 device groups is a subgroup divided based on UE_ID.

As one embodiment, in the X2 device groups, there is one device group that is a subgroup divided based on UE_ID, and in the X2 device groups, there is another device group that is a subgroup assigned by a core network.

As one embodiment, any two of the X2 device groups are not the same.

As one embodiment, in the X2 device groups, there are two identical device groups.

As one embodiment, in the X2 device groups, there is at least one device group that is a subgroup assigned by a core network, and in the X2 device groups, there is one device group composed of user equipment that does not support assignment by the core network.

As one embodiment, any one of the X2 device groups only comprises one piece of user equipment.

As one embodiment, at least one of the X2 device groups comprises a plurality of pieces of user equipment.

As one embodiment, the first device group is one of the X2 device groups.

As one embodiment, a number of any one of the X2 identifiers is a non-negative integer.

As one embodiment, a number of any one of the X2 identifiers is an integer.

As one embodiment, the technical feature "the X2 identifiers respectively correspond to the X2 device groups" comprises the following meaning: the X2 identifiers are respectively used for identifying the X2 device groups.

As one embodiment, the technical feature "the X2 identifiers respectively correspond to the X2 device groups" comprises the following meaning: the X2 identifiers are respectively associated with the X2 device groups.

As one embodiment, the technical feature "the X2 identifiers respectively correspond to the X2 device groups" comprises the following meaning: the X2 identifiers are respectively used for the X2 device groups.

As one embodiment, the technical feature "the X2 identifiers respectively correspond to the X2 device groups" comprises the following meaning: the X2 identifiers are respectively predefined or configured for the X2 device groups.

As one embodiment, the technical feature "the X2 identifiers respectively correspond to the X2 device groups" comprises the following meaning: the X2 identifiers are respectively identifiers of the X2 device groups.

As one embodiment, the technical feature "the X2 identifiers respectively correspond to the X2 device groups" comprises the following meaning: the X2 identifiers are respectively assigned, configured or default for the X2 device groups.

As one embodiment, the technical feature "the X2 identifiers respectively correspond to the X2 device groups" comprises the following meaning: the X2 identifiers are respectively identifiers or indexes of configuration sets for the X2 device groups.

As one embodiment, in the X2 identifiers, there is one identifier that is assigned to a corresponding device group by a core network.

As one embodiment, in the X2 identifiers, there is one identifier that is equal to a default value.

As one embodiment, in the X2 identifiers, there is one identifier that is equal to a default value when a corresponding device group is not assigned or configured.

As one embodiment, any one of the X2 identifiers is equal to an identifier or index of one of the X1 configuration sets.

As one embodiment, any one of the X2 identifiers is equal to an identifier or index of one subgroup.

As one embodiment, any one of the X2 identifiers is equal to an identifier or index of a subgroup configured by one IE "subgroupConfig".

As one embodiment, any one of the X2 identifiers is equal to an identifier or index of one PEI subgroup.

As one embodiment, the X2 is equal to the X1, the X2 identifiers correspond to the X1 configuration sets one by one, and the target configuration set is a configuration set that corresponds to an identifier of the first device group in the X1 configuration sets. As one dependent embodiment of the above embodiment, a one-to-one correspondence relationship between the X2 identifiers and the X1 configuration sets is predefined or configurable.

As one embodiment, the X2 is greater than the X1, and an index of the target configuration set in the X1 configuration sets is equal to a modulo value of an identifier of the first device group to the X1.

As one embodiment, the X2 is greater than the X1, the X2 device groups are divided into X1 device sets, the X1 device sets correspond to the X1 configuration sets one by one, and the target configuration set is a configuration set that corresponds to a device set to which the first device group belongs in the X1 configuration sets. As one dependent embodiment of the above embodiment, a one-to-one correspondence relationship between the X1 device sets and the X1 configuration sets is predefined or configurable.

As one embodiment, the X2 is smaller than the X1, and any one of the X2 device groups corresponds to at least one of the X1 configuration sets; and when the first device group corresponds to a plurality of configurations in the X1 configuration sets, the time-domain position of the first occasion is used for determining the target configuration set from the corresponding multiple configuration sets.

As one embodiment, the first identifier and the second identifier are not equal.

As one embodiment, the first identifier and the second identifier are independent.

As one embodiment, the first identifier is one of the X2 identifiers, and the second identifier is one of the X2 identifiers.

As one embodiment, each piece of user equipment included in a device group corresponding to the first identifier in the X2 device groups is assigned the first identifier.

As one embodiment, each piece of user equipment included in a device group corresponding to the first identifier in the X2 device groups is assigned the first identifier by a core network.

As one embodiment, each piece of user equipment included in a device group corresponding to the first identifier in the X2 device groups is assigned the first identifier by a network device.

As one embodiment, one identifier or index of each piece of user equipment included in a device group corresponding to the first identifier in the X2 device groups that is assigned by a core network is equal to the first identifier.

As one embodiment, one piece of user equipment included in a device group corresponding to the first identifier in the X2 device groups is assigned the first identifier by a core network.

As one embodiment, a device group corresponding to the first identifier in the X2 device groups only comprises one piece of user equipment.

As one embodiment, a device group corresponding to the first identifier in the X2 device groups comprises a plurality of pieces of user equipment.

As one embodiment, a device group corresponding to the first identifier in the X2 device groups is the first device group.

As one embodiment, a device group corresponding to the first identifier in the X2 device groups is a device group other than the first device group.

As one embodiment, "one piece of user equipment is not assigned an identifier" comprises the following meaning: this user equipment does not support being assigned an identifier, or this user equipment supports being assigned an identifier but is not assigned an identifier.

As one embodiment, one piece of user equipment included in a device group corresponding to the second identifier in the X2 device groups does not support being assigned an identifier.

As one embodiment, one piece of user equipment included in a device group corresponding to the second identifier in the X2 device groups is not assigned an identifier.

As one embodiment, one piece of user equipment included in a device group corresponding to the second identifier in the X2 device groups is assigned the second identifier.

As one embodiment, each piece of user equipment included in a device group corresponding to the second identifier in the X2 device groups is assigned the second identifier.

As one embodiment, one piece of user equipment included in a device group corresponding to the second identifier in the X2 device groups is not assigned an identifier, and another piece of user equipment included in the device group corresponding to the second identifier in the X2 device groups is assigned the second identifier.

As one embodiment, any piece of user equipment included in a device group corresponding to the second identifier in the X2 device groups either does not support being assigned an identifier or is not assigned an identifier or is assigned the second identifier.

As one embodiment, any piece of user equipment included in a device group corresponding to the second identifier in the X2 device groups either does not support being assigned an identifier by a core network or is not assigned an identifier by the core network or is assigned the second identifier by the core network.

As one embodiment, any piece of user equipment included in a device group corresponding to the second identifier in the X2 device groups either does not support being assigned an identifier by a network device or is not assigned an identifier by the network device or is assigned the second identifier by the network device.

As one embodiment, a device group corresponding to the second identifier in the X2 device groups is a fallback device group.

As one embodiment, a device group corresponding to the second identifier in the X2 device groups is a default device group.

As one embodiment, a device group corresponding to the second identifier in the X2 device groups only comprises one piece of user equipment.

As one embodiment, a device group corresponding to the second identifier in the X2 device groups comprises a plurality of pieces of user equipment.

As one embodiment, a device group corresponding to the second identifier in the X2 device groups is the first device group.

As one embodiment, a device group corresponding to the second identifier in the X2 device groups is a device group other than the first device group.

As one embodiment, there is a third identifier in the X2 identifiers, the third identifier and the first identifier are not identical, the third identifier and the second identifier are not identical, and each user equipment included in a device group corresponding to the third identifier in the X2 device groups does not support being assigned an identifier.

As one embodiment, there is a third identifier in the X2 identifiers, the third identifier and the first identifier are not identical, the third identifier and the second identifier are not identical, and each piece of user equipment included in a device group corresponding to the third identifier in the X2 device groups is not assigned an identifier.

**Embodiment 8**

Embodiment 8 illustrates a schematic diagram of X1 occasion groups according to one embodiment of the present application, as shown in FIG. 8. In FIG. 8, a horizontal axis represents time, each filled rectangle represents one occasion included in one of the X1 occasion groups, and rectangles with the same filling constitute one of the X1 occasion groups.

In Embodiment 8, the first occasion in the present application belongs to a first occasion group, the first occasion group is one of the X1 occasion groups, and any one of the X1 occasion groups comprises at least one occasion; any occasion included in any one of the X1 occasion groups belongs to a first time window, and the first information block in the present application is used for determining the X1 occasion groups from the first time window; and the X1 occasion groups correspond to the X1 configuration sets in the present application one by one, and the target configuration set in the present application is a configuration set corresponding to the first occasion group.

As one embodiment, the first occasion group only comprises one occasion.

As one embodiment, the first occasion group comprises a plurality of occasions.

As one embodiment, any one of the X1 occasion groups only comprises one occasion.

As one embodiment, any one of the X1 occasion groups comprises a plurality of occasions.

As one embodiment, in the X1 occasion groups, there is one occasion group that only comprises one occasion, and in the X1 occasion groups, there is another occasion group that comprises a plurality of occasions.

As one embodiment, the numbers of occasions included in any two of the X1 occasion groups are equal.

As one embodiment, the number of occasions included in two of the X1 occasion groups is not equal.

As one embodiment, the number of occasions included in 1 of the X1 occasion groups is predefined or fixed or configurable.

As one embodiment, the X1 occasion groups comprise all occasions in the first time window.

As one embodiment, the X1 occasion groups comprise part of occasions in the first time window.

As one embodiment, the X1 occasion groups comprise all network-side occasions in the first time window.

As one embodiment, the X1 occasion groups comprise occasions associated with all of the user equipment in the first time window.

As one embodiment, the X1 occasion groups comprise all or part of occasions associated with the first node device in the first time window.

As one embodiment, any occasion included in any one of the X1 occasion groups is a paging occasion.

As one embodiment, any occasion included in any one of the X1 occasion groups is one of all paging occasions on a network side.

As one embodiment, any occasion included in any one of the X1 occasion groups is a paging occasion associated with the first node device in the present application.

As one embodiment, any occasion included in any one of the X1 occasion groups is not a paging occasion associated with the first node device in the present application.

As one embodiment, any occasion included in any one of the X1 occasion groups is a paging occasion associated with the first node device and user equipment other than the first node device in the present application.

As one embodiment, any occasion included in any one of the X1 occasion groups is a paging occasion associated with at least 1 piece of user equipment including the first node device in the present application.

As one embodiment, any occasion included in any one of the X1 occasion groups is a paging occasion associated with at least 1 piece of user equipment including the first device group in the present application.

As one embodiment, any occasion included in any one of the X1 occasion groups is a PEI occasion.

As one embodiment, any occasion included in any one of the X1 occasion groups is one of all PEI occasions on a network side.

As one embodiment, any occasion included in any one of the X1 occasion groups is a PS (Power Saving) PDCCH monitoring occasion.

As one embodiment, any occasion included in any one of the X1 occasion groups is a PDCCH monitoring occasion whose CRC is scrambled by a PS-RNTI.

As one embodiment, any occasion included in any one of the X1 occasion groups is a PEI occasion associated with the first node device in the present application.

As one embodiment, any occasion included in any one of the X1 occasion groups is not a PEI occasion associated with the first node device in the present application.

As one embodiment, any occasion included in any one of the X1 occasion groups is a PEI occasion associated with at least 1 piece of user equipment including the first node device in the present application.

As one embodiment, any occasion included in any one of the X1 occasion groups comprises at least 1 PDCCH monitoring occasion.

As one embodiment, any occasion included in any one of the X1 occasion groups comprises a plurality of slots in which paging DCI may be transmitted.

As one embodiment, any occasion included in any one of the X1 occasion groups is a paging frame (PF).

As one embodiment, the first time window comprises any occasion included in any one of the X1 occasion groups.

As one embodiment, any occasion included in any one of the X1 occasion groups is in first time window.

As one embodiment, the first time window is predefined or configurable.

As one embodiment, the first information block is used for determining the first time window.

As one embodiment, an information block other than the first information block is used for determining the first time window.

As one embodiment, the first time window is a DRX cycle.

As one embodiment, the first time window is composed of a plurality of consecutive slots.

As one embodiment, the first time window is one slot.

As one embodiment, the first time window is composed of a plurality of consecutive frames.

As one embodiment, the first time window is one frame.

As one embodiment, the first time window is an eDRX cycle.

As one embodiment, the first time window comprises a plurality of consecutive DRX cycles.

As one embodiment, the first time window comprises a plurality of consecutive eDRX cycles.

As one embodiment, the length of the first time window is configured, and the beginning of the first time window is predefined.

As one embodiment, the length of the first time window is configured, and the beginning of the first time window is obtained according to the length of the first time window.

As one embodiment, the technical feature "the first information block is used for determining the X1 occasion groups from the first time window" comprises the following meaning: the first information block is used by the first node device in the present application for determining the X1 occasion groups from the first time window.

As one embodiment, the technical feature "the first information block is used for determining the X1 occasion groups from the first time window" comprises the following meaning: the first information block is used for determining at least 1 of the X1 occasion groups from the first time window.

As one embodiment, the technical feature "the first information block is used for determining the X1 occasion groups from the first time window" comprises the following meaning: all or part included in the first information block is used for explicitly or implicitly indicating the X1 occasion groups from the first time window.

As one embodiment, the technical feature "the first information block is used for determining the X1 occasion groups from the first time window" comprises the following meaning: the first information block is used for determining the first time window, and the first time window is used for determining the X1 occasion groups.

As one embodiment, the technical feature "the first information block is used for determining the X1 occasion groups from the first time window" comprises the following meaning: the first information block is used for determining the X1, and occasions in the first time window are divided into the X1 occasion groups.

As one embodiment, the technical feature "the first information block is used for determining the X1 occasion groups from the first time window" comprises the following meaning: the first information block is used for determining the X1, and occasions in the first time window are divided into the X1 occasion groups according to a predefined or configurable rule.

As one embodiment, the technical feature "the first information block is used for determining the X1 occasion groups from the first time window" comprises the following meaning: the first information block is used for determining the X1, and all occasions associated with the first node device in the first time window are averagely divided into the X1 occasion groups.

As one embodiment, the technical feature "the first information block is used for determining the X1 occasion groups from the first time window" comprises the following meaning: the first information block is used for determining the X1, and occasions in the first time window are averagely divided into the X1 occasion groups in a chronological order.

As one embodiment, the technical feature "the first information block is used for determining the X1 occasion groups from the first time window" comprises the following meaning: the first information block is used for determining the number of occasions included in each one of the X1 occasion groups, and occasions in the first time window are sequentially divided into the X1 occasion groups in a chronological order.

As one embodiment, the technical feature "the first information block is used for determining the X1 occasion groups from the first time window" comprises the following meaning: the first information block comprises at least 1 bitmap, one bit in each bitmap included in the first time window represents one occasion in the first time window, and each bitmap included in the first information block is used for determining occasions included in one of the X1 occasion groups from occasions included in the first time window.

As one embodiment, the technical feature "the first information block is used for determining the X1 occasion groups from the first time window" comprises the following meaning: the X1 occasion groups constitute one occasion group list, and the first information block is used for adding an occasion group to the occasion group list or releasing an occasion group.

As one embodiment, the technical feature "the first information block is used for determining the X1 occasion groups from the first time window" comprises the following meaning: each one of the X1 occasion groups is one occasion list, and the first information block is used for adding an occasion in the first time window to the occasion list or releasing an occasion in the first time window.

As one embodiment, a one-to-one correspondence relationship between the X1 occasion groups and the X1 configuration sets is predefined or configurable.

As one embodiment, the technical feature "the X1 occasion groups correspond to the X1 configuration sets one by one" comprises the following meaning: the X1 occasion groups and the X1 configuration sets are respectively associated with each other.

As one embodiment, the technical feature "the X1 occasion groups correspond to the X1 configuration sets one by one" comprises the following meaning: the X1 configuration sets are respectively applicable to the X1 occasion groups.

As one embodiment, the technical feature "the X1 occasion groups correspond to the X1 configuration sets one by one" comprises the following meaning: the X1 configuration sets are respectively for the X1 occasion groups.

As one embodiment, the technical feature "the X1 occasion groups correspond to the X1 configuration sets one by one" comprises the following meaning: the X1 configuration sets are respectively adopted in the occasions in the X1 occasion groups.

As one embodiment, the technical feature "the X1 occasion groups correspond to the X1 configuration sets one by one" comprises the following meaning: configuration sets in the X1 configuration sets are configured per occasion group.

As one embodiment, the target configuration set is a configuration set corresponding to the first occasion group in the X1 configuration sets.

As one embodiment, the target configuration set and the first occasion group correspond to each other.

**Embodiment 9**

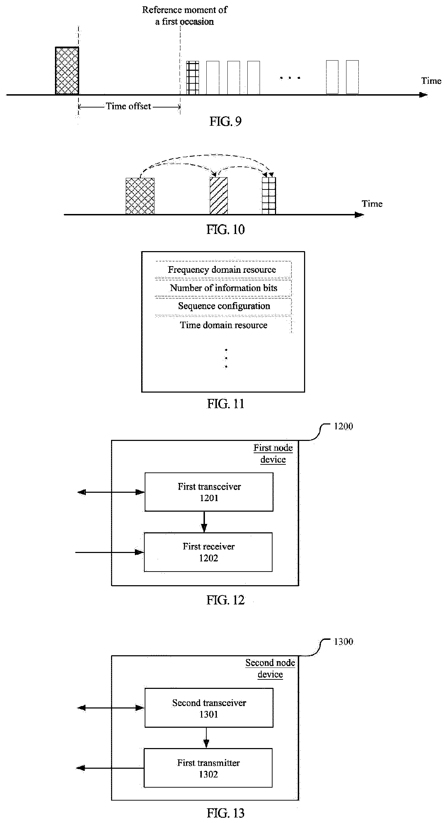

Embodiment 9 illustrates a schematic diagram of a relationship between a target wake-up signal and a first occasion according to one embodiment of the present application, as shown in FIG. 9. In FIG. 9, a horizontal axis represents time, a thick-line rectangle filled with oblique lines represents the target wake-up signal, a thin-line rectangle filled with cross-shaped lines represents the first occasion, and each unfilled rectangle represents an occasion other than the first occasion.

In Embodiment 9, the first information block in the present application is used for determining a time-domain position relationship between a time-domain resource occupied by the target wake-up signal in the present application and the first occasion in the present application, and the first information block is used for determining the number of device groups associated with the first occasion.

As one embodiment, the technical feature "the first information block is used for determining a time-domain position relationship between a time-domain resource occupied by the target wake-up signal and the first occasion" comprises the following meaning: the first information block is used by the first node device in the present application for determining the time-domain position relationship between the time-domain resource occupied by the target wake-up signal and the first occasion.

As one embodiment, the technical feature "the first information block is used for determining a time-domain position relationship between a time-domain resource occupied by the target wake-up signal and the first occasion" comprises the following meaning: all or part included in the first information block is used for explicitly or implicitly indicating the time-domain position relationship between the time-domain resource occupied by the target wake-up signal and the first occasion.

As one embodiment, the technical feature "the first information block is used for determining a time-domain position relationship between a time-domain resource occupied by the target wake-up signal and the first occasion" comprises the following meaning: the first information block is used for determining a sequential relationship between the time-domain resource occupied by the target wake-up signal and the first occasion.

As one embodiment, the technical feature "the first information block is used for determining a time-domain position relationship between a time-domain resource occupied by the target wake-up signal and the first occasion" comprises the following meaning: the first information block is used for determining the length of a time interval between a starting moment of the time-domain resource occupied by the target wake-up signal and a starting moment of the first occasion.

As one embodiment, the technical feature "the first information block is used for determining a time-domain position relationship between a time-domain resource occupied by the target wake-up signal and the first occasion" comprises the following meaning: the first information block is used for determining the length of a time interval between a starting moment (or ending moment) of the time-domain resource occupied by the target wake-up signal and a starting moment (or ending moment) of one frame or one slot or one DRX cycle associated with the first occasion (or one frame or one slot or one DRX cycle to which the first occasion belongs).

As one embodiment, the technical feature "the first information block is used for determining a time-domain position relationship between a time-domain resource occupied by the target wake-up signal and the first occasion" comprises the following meaning: the first information block is used for determining the length of a time interval between a starting moment (or ending moment) of the time-domain resource occupied by the target wake-up signal and a starting moment (or ending moment) of one time window associated with the first occasion (or one time window to which the first occasion belongs). As one dependent embodiment of the above embodiment, one time window associated with the first occasion (or one time window to which the first occasion belongs) comprises at least 1 slot. As one dependent embodiment of the above embodiment, one time window associated with the first occasion (or one time window to which the first occasion belongs) comprises at least 1 frame. As one dependent embodiment of the above embodiment, one time window associated with the first occasion (or one time window to which the first occasion belongs) comprises at least 1 OFDM symbol. As one dependent embodiment of the above embodiment, one time window associated with the first occasion (or one time window to which the first occasion belongs) comprises at least 1 DRX cycle.

As one embodiment, the technical feature "the first information block is used for determining a time-domain position relationship between a time-domain resource occupied by the target wake-up signal and the first occasion" comprises the following meaning: the first information block is used for determining the length of a time interval between the time-domain resource occupied by the target wake-up signal and the first occasion.

As one embodiment, the technical feature "the first information block is used for determining a time-domain position relationship between a time-domain resource occupied by the target wake-up signal and the first occasion" comprises the following meaning: the first information block is used for determining the time-domain position of the target wake-up signal.

As one embodiment, the technical feature "the first information block is used for determining a time-domain position relationship between a time-domain resource occupied by the target wake-up signal and the first occasion" comprises the following meaning: the first information block is used for determining a starting moment or ending moment of the time-domain resource occupied by the target wake-up signal.

As one embodiment, the technical feature "the first information block is used for determining a time-domain position relationship between the time-domain resource occupied by the target wake-up signal and the first occasion" comprises the following meaning: the first information block is used for determining a reference moment and the length of a time interval between a starting moment or ending moment of the time-domain resource occupied by the target wake-up signal and the reference moment. As one dependent embodiment of the above embodiment, the first occasion is used for determining the reference moment. As one dependent embodiment of the above embodiment, one frame associated with the first occasion (or one frame to which the first occasion belongs) is used for determining the reference moment. As one dependent embodiment of the above embodiment, all or part included in the first information block is used for explicitly or implicitly indicating the length of a time interval between the reference moment and a starting moment of one frame associated with the first occasion (or one frame to which the first occasion belongs). As one dependent embodiment of the above embodiment, one DRX cycle associated with the first occasion (or one DRX cycle to which the first occasion belongs) is used for determining the reference moment.

As one embodiment, the technical feature "the first information block is used for determining the number of device groups associated with the first occasion" comprises the following meaning: the first information block is used by the first node device in the present application for determining the number of the device groups associated with the first occasion.

As one embodiment, the technical feature "the first information block is used for determining the number of device groups associated with the first occasion" comprises the following meaning: all or part included in the first information block is used for explicitly or implicitly indicating the number of the device groups associated with the first occasion.

As one embodiment, the technical feature "the first information block is used for determining the number of device groups associated with the first occasion" comprises the following meaning: the first information block is used for determining the number of device groups corresponding to the first occasion.

As one embodiment, the technical feature "the first information block is used for determining the number of device groups associated with the first occasion" comprises the following meaning: the first information block is used for determining the number of device groups into which user equipment for monitoring the first occasion is divided.

As one embodiment, the technical feature "the first information block is used for determining the number of device groups associated with the first occasion" comprises the following meaning: the first information block is used for determining the number of device groups into which user equipment that can monitor paging in the first occasion is divided.

As one embodiment, the technical feature "the first information block is used for determining the number of device groups associated with the first occasion" comprises the following meaning: the first information block is used for determining the total number of device groups into which user equipment associated with the first occasion is divided.

As one embodiment, the technical feature "the first information block is used for determining the number of device groups associated with the first occasion" comprises the following meaning: the first information block is used for determining the number of same-type device groups into which user equipment associated with the first occasion is divided.

As one embodiment, the technical feature "the first information block is used for determining the number of device groups associated with the first occasion" comprises the following meaning: the first information block is used for determining the number of device groups into which user equipment whose paging occasion is the first occasion is divided that is obtained by calculation according to a user equipment identifier.

As one embodiment, the first information block is also used for determining the number of paging occasions associated with the target wake-up signal.

## Embodiment 10

Embodiment 10 illustrates a schematic diagram of a relationship between second signaling and first signaling according to one embodiment of the present application, as shown in FIG. 10. In FIG. 10, a horizontal axis represents time, a rectangle filled with intersected lines represents a target wake-up signal, a rectangle filled with oblique lines represents second signaling, a rectangle filled with cross-shaped lines represents first signaling, and a dotted line with an arrow represents the relationship of determining whether to monitor.

In Embodiment 10, the second signaling in the present application is used for indicating whether to monitor the first signaling in the present application in the first occasion in the present application; and at least one of the second information block in the present application or the first device group in the present application is used for determining whether to monitor the second signaling.

As one embodiment, whether to monitor second signaling is determined through at least one of a second information block or a first device group, so that the monitoring of PEI can be flexibly configured to reduce the false alarm probability of wake-up while ensuring backward compatibility.

As one embodiment, the second signaling is PDCCH.

As one embodiment, the second signaling is used for paging a PDCCH indicated in advance.

As one embodiment, the second signaling comprises all or part of fields in one DCI format.

As one embodiment, the second signaling is a PDCCH whose CRC is scrambled by a PEI-RNTI.

As one embodiment, the second signaling is a PDCCH whose CRC is scrambled by a PS-RNTI.

As one embodiment, the second signaling comprises all or part of fields in a DCI format 2_6.

As one embodiment, the second signaling comprises all or part of fields in a DCI format 2_7.

As one embodiment, the second signaling is carried by a PDSCH (Physical Downlink Shared channel).

As one embodiment, the second signaling carries high-layer information.

As one embodiment, the second signaling carries physical layer information.

As one embodiment, the second signaling carries core network information.

As one embodiment, the two expressions of "monitoring second signaling" and "receiving information carried by second signaling" are equivalent or may be used interchangeably.

As one embodiment, the two expressions of "monitoring second signaling" and "decoding second signaling" are equivalent or may be used interchangeably.

As one embodiment, the two expressions of "monitoring second signaling" and "blindly decoding second signaling" are equivalent or may be used interchangeably.

As one embodiment, the two expressions of "monitoring second signaling" and "performing decoding and CRC on second signaling" are equivalent or may be used interchangeably.

As one embodiment, the two expressions of "monitoring second signaling" and "performing decoding and CRC scrambled by a RNTI (Radio Network Temporary Identity) on second signaling" are equivalent or may be used interchangeably.

As one embodiment, the two expressions of "monitoring second signaling" and "decoding second signaling for one or more DCI (Downlink Control Information) format(s)" are equivalent or may be used interchangeably.

As one embodiment, the two expressions of "monitoring second signaling" and "decoding second signaling for one or more DCI payload sizes" are equivalent or may be used interchangeably.

As one embodiment, the technical feature "the second signaling is used for indicating whether to monitor the first signaling in the first occasion" comprises the following meaning: the second signaling is used by a network node to indicate whether the first node device in the present application monitors the first signaling in the first occasion.

As one embodiment, the technical feature "the second signaling is used for indicating whether to monitor the first signaling in the first occasion" comprises the following meaning: the second signaling is used by the second node device in the present application to indicate whether to monitor the first signaling in the first occasion.

As one embodiment, the technical feature "the second signaling is used for indicating whether to monitor the first signaling in the first occasion" comprises the following meaning: the second signaling is used by a core network to indicate whether to monitor the first signaling in the first occasion.

As one embodiment, the technical feature "the second signaling is used for indicating whether to monitor the first signaling in the first occasion" comprises the following meaning: when the second signaling is monitored, the second signaling is used for indicating whether to monitor the first signaling in the first occasion.

As one embodiment, the technical feature "the second signaling is used for indicating whether to monitor the first signaling in the first occasion" comprises the following meaning: when the second signaling is detected, the second signaling is used for indicating whether to monitor the first signaling in the first occasion.

As one embodiment, the technical feature "the second signaling is used for indicating whether to monitor the first signaling in the first occasion" comprises the following meaning: when the second signaling is monitored and detected, the second signaling is used for indicating whether to monitor the first signaling in the first occasion.

As one embodiment, the technical feature "the second signaling is used for indicating whether to monitor the first signaling in the first occasion" comprises the following meaning: when the second signaling is monitored and detected, the second signaling is used for indicating whether to monitor the first signaling in the first occasion; otherwise, the second information block is used for determining whether to monitor the first signaling in the first occasion.

As one embodiment, the technical feature "the second signaling is used for indicating whether to monitor the first signaling in the first occasion" comprises the following meaning: the second signaling is used for indicating at least 1 device group, and whether the first device group is one of the at least 1 device group indicated by the second signaling is used for determining whether to monitor the first signaling in the first occasion.

As one embodiment, the technical feature "the second signaling is used for indicating whether to monitor the first signaling in the first occasion" comprises the following meaning: the second signaling is used for indicating at least 1 device group, and whether the first node device belongs to 1 device group indicated by the second signaling is used for determining whether to monitor the first signaling in the first occasion.

As one embodiment, the technical feature "the second signaling is used for indicating whether to monitor the first signaling in the first occasion" comprises the following meaning: the second signaling is used for indicating at least 1 device group, and whether the first node device belongs to 1 device group indicated by the second signaling and the first device group at the same time is used for determining whether to monitor the first signaling in the first occasion.

As one embodiment, the technical feature "the second signaling is used for indicating whether to monitor the first signaling in the first occasion" comprises the following meaning: the second signaling is used for indicating at least 1 device group; when the first node device belongs to 1 device group indicated by the second signaling, the first node device monitors the first signaling in the first occasion; otherwise, the first node device is not required to monitor the first signaling in the first occasion.

As one embodiment, the technical feature "the second signaling is used for indicating whether to monitor the first signaling in the first occasion" comprises the following meaning: the second signaling is used for indicating at least 1 device group; when the first node device belongs to 1 device group indicated by the second signaling and the first device group at the same time, the first node device monitors the first signaling in the first occasion; otherwise, the first node device is not required to monitor the first signaling in the first occasion.

As one embodiment, when the second signaling is monitored, the second signaling is used for indicating whether to monitor the first signaling in the first occasion.

As one embodiment, when the second signaling is monitored and detected, the second signaling is used for indicating whether to monitor the first signaling in the first occasion.

As one embodiment, "monitoring the first signaling in the first occasion" and "the first node device is required to monitor the first signaling in the first occasion" are equivalent or may be used interchangeably.

As one embodiment, "monitoring the first signaling in the first occasion" and "the first node device expects that the first signaling is transmitted in the first occasion" are equivalent or may be used interchangeably.

As one embodiment, "not monitoring the first signaling in the first occasion" and "the first node device is not required to monitor the first signaling in the first occasion" are equivalent or may be used interchangeably.

As one embodiment, "not monitoring the first signaling at the first occasion" and "the first node device does not expect that the first signaling is transmitted in the first occasion" are equivalent or may be used interchangeably.

As one embodiment, "monitoring the second signaling" and "the first node device is required to monitor the second signaling" are equivalent or may be used interchangeably.

As one embodiment, "monitoring the second signaling" and "the first node device expects that the second signaling is transmitted" are equivalent or may be used interchangeably.

As one embodiment, "not monitoring the second signaling" and "the first node device is not required to monitor the second signaling" are equivalent or may be used interchangeably.

As one embodiment, "not monitoring the second signaling" and "the first node device does not expect that the second signaling is transmitted" are equivalent or may be used interchangeably.

As one embodiment, the technical feature "at least one of the second information block or the first device group is used for determining whether to monitor the second signaling" comprises the following meaning: at least one of the second information block or the first device group is used by the first node device in the present application for determining whether it is required to monitor the second signaling.

As one embodiment, the technical feature "at least one of the second information block or the first device group is used for determining whether to monitor the second signaling" comprises the following meaning: the second information block and the first device group are both used for determining whether to monitor the second signaling.

As one embodiment, the technical feature "at least one of the second information block or the first device group is used for determining whether to monitor the second signaling" comprises the following meaning: only one of the second information block or the first device group is used for determining whether to monitor the second signaling.

As one embodiment, the technical feature "at least one of the second information block or the first device group is used for determining whether to monitor the second signaling" comprises the following meaning: all or part included in the second information block is used for explicitly or implicitly indicating whether to monitor the second signaling.

As one embodiment, the technical feature "at least one of the second information block or the first device group is used for determining whether to monitor the second signaling" comprises the following meaning: whether the first device group and one of the at least 1 device group divided for the second signaling are identical is used for determining whether to monitor the second signaling.

As one embodiment, the technical feature "at least one of the second information block or the first device group is used for determining whether to monitor the second signaling" comprises the following meaning: when the first device group and one of the at least 1 device group divided for the second signaling are identical, the first node device is not required to monitor the second signaling; otherwise, the first node device monitors the second signaling.

As one embodiment, the technical feature "at least one of the second information block or the first device group is used for determining whether to monitor the second signaling" comprises the following meaning: whether the first device group and one of the at least 1 device group divided for the second signaling are identical and the second information block is together used for determining whether to monitor the second signaling.

As one embodiment, the technical feature "at least one of the second information block or the first device group is used for determining whether to monitor the second signaling" comprises the following meaning: when the first device group and one of the at least 1 device group divided for the second signaling are identical, all or part included in the second information block is used for explicitly or implicitly indicating whether to monitor the second signaling; otherwise, the first node device monitors the second signaling.

As one embodiment, the technical feature "at least one of the second information block or the first device group is used for determining whether to monitor the second signaling" comprises the following meaning: when the first device group and one of the at least 1 device group divided for the second signaling are identical, the first node device is not required to monitor the second signaling; otherwise, all or part included in the second information block is used for explicitly or implicitly indicating whether to monitor the second signaling.

As one embodiment, the technical feature "at least one of the second information block or the first device group is used for determining whether to monitor the second signaling" comprises the following meaning: when the capability of the first node device supports monitoring the second signaling, at least one of the second information block or the first device group is used for determining whether to monitor the second signaling.

As one embodiment, the technical feature "at least one of the second information block or the first device group is used for determining whether to monitor the second signaling" comprises the following meaning: when the capability of the first node device supports monitoring the second signaling, at least one of the second information block or the first device group is used for determining whether to monitor the second signaling; otherwise, the first node device is not required to monitor the second signaling.

As one embodiment, the capability of the first node device is also used for determining whether to monitor the second signaling.

As one embodiment, the capability of the first node device is used for determining whether at least one of the second information block or the first device group is used for determining whether to monitor the second signaling.

As one embodiment, the capability of the first node device and whether the target wake-up signal is detected are used for determining whether to monitor a PEI PDCCH.

As one embodiment, the capability of the first node device and whether the target wake-up signal is detected are used for determining whether to monitor a PDCCH whose CRC is scrambled by a PS-RNTI.

As one embodiment, the capability of the first node device and whether the target wake-up signal is detected are used for determining whether to monitor a PDCCH whose CRC is scrambled by a PEI-RNTI.

**Embodiment 11**

Embodiment 11 illustrates a schematic diagram of a target configuration set according to one embodiment of the present application, as shown in FIG. 11. In FIG. 11, a large solid-line rectangle represents a target configuration set, and each dotted-line rectangle in the solid-line rectangle represents one configuration parameter value included in the target configuration set.

In Embodiment 11, the target configuration set in the present application comprises at least one of the following four: a configuration parameter value of a frequency-domain resource occupied by the target wake-up signal in the present application, a configuration parameter value of a number of information bits included in the second information block in the present application, a configuration parameter value of a sequence generating the target wake-up signal, and a configuration parameter value of a number of time-domain resources occupied by the target wake-up signal.

As one embodiment, by supporting different loads and different generation sequences of a wake-up signal, the flexibility of a wake-up signal configuration is improved, and the optimization is performed between the reception performance and the wake-up efficiency of the wake-up signal.

As one embodiment, the target configuration set comprises 1 or more configuration parameter values of a frequency-domain resource occupied by the target wake-up signal.

As one embodiment, the target configuration set comprises 1 or more configuration parameter values of the number of information bits included in the second information block.

As one embodiment, the target configuration set comprises 1 or more configuration parameter values of a sequence generating the target wake-up signal.

As one embodiment, the target configuration set comprises 1 or more configuration parameter values of the number of time-domain resources occupied by the target wake-up signal.

As one embodiment, the target configuration set comprises only one of the following four: a configuration parameter value of a frequency-domain resource occupied by the target wake-up signal, a configuration parameter value of a number of information bits included in the second information block, a configuration parameter value of a sequence generating the target wake-up signal, and a configuration parameter value of a number of time-domain resources occupied by the target wake-up signal.

As one embodiment, the target configuration set comprises any one of the following four: a configuration parameter value of a frequency-domain resource occupied by the target wake-up signal, a configuration parameter value of a number of information bits included in the second information block, a configuration parameter value of a sequence generating the target wake-up signal, and a configuration parameter value of a number of time-domain resources occupied by the target wake-up signal, or a combination of any multiple ones of them.

As one embodiment, the target configuration set comprises any combination of the following four: a configuration parameter value of a frequency-domain resource occupied by the target wake-up signal, a configuration parameter value of a number of information bits included in the second information block, a configuration parameter value of a sequence generating the target wake-up signal, and a configuration parameter value of a number of time-domain resources occupied by the target wake-up signal.

As one embodiment, the target configuration set comprises any combination of two or three of the following four: a configuration parameter value of a frequency-domain resource occupied by the target wake-up signal, a configuration parameter value of a number of information bits included in the second information block, a configuration parameter value of a sequence generating the target wake-up signal, and a configuration parameter value of a number of time-domain resources occupied by the target wake-up signal.

As one embodiment, the target configuration set comprises all of the following four: a configuration parameter value of a frequency-domain resource occupied by the target wake-up signal, a configuration parameter value of a number of information bits included in the second information block, a configuration parameter value of a sequence generating the target wake-up signal, and a configuration parameter value of a number of time-domain resources occupied by the target wake-up signal.

As one embodiment, a frequency-domain resource occupied by the target wake-up signal comprises a frequency-domain resource protecting a frequency-domain resource or protecting a band.

As one embodiment, a frequency-domain resource occupied by the target wake-up signal does not comprise a frequency-domain resource protecting a frequency-domain resource or protecting a band.

As one embodiment, at least 1 configuration parameter value of a frequency-domain resource occupied by the target wake-up signal comprises a subcarrier spacing of subcarriers occupied by the target wake-up signal in a frequency domain.

As one embodiment, at least 1 configuration parameter value of a frequency-domain resource occupied by the target wake-up signal comprises the number of RBs or the number of subcarriers occupied by the target wake-up signal in a frequency domain.

As one embodiment, at least 1 configuration parameter value of a frequency-domain resource occupied by the target wake-up signal comprises a bandwidth of the target wake-up signal in a frequency domain.

As one embodiment, at least 1 configuration parameter value of a frequency-domain resource occupied by the target wake-up signal comprises the position of the frequency-domain resource occupied by the target wake-up signal in a frequency domain.

As one embodiment, at least 1 configuration parameter value of a frequency-domain resource occupied by the target wake-up signal comprises the number of RBs or the number of subcarriers occupied by the target wake-up signal in a frequency domain and the position of the frequency-domain resource occupied by the target wake-up signal in the frequency domain.

As one embodiment, at least 1 configuration parameter value of a frequency-domain resource occupied by the target wake-up signal comprises the position of one frequency point in the frequency-domain resource occupied by the target wake-up signal in a frequency domain.

As one embodiment, at least 1 configuration parameter value of a frequency-domain resource occupied by the target wake-up signal comprises the number of frequency-domain protection resources configured by the target wake-up signal in a frequency-domain.

As one embodiment, at least 1 configuration parameter value of the number of information bits included in the second information block comprises the number of bits included in at least 1 field in the second information block.

As one embodiment, at least 1 configuration parameter value of the number of information bits included in the second information block comprises a range indication of the number of bits included in the second information block.

As one embodiment, at least 1 configuration parameter value of the number of information bits included in the second information block comprises the number of device groups used in the second information block, and the number of the information bits included in the second information block is related to the number of the device groups used in the second information block.

As one embodiment, at least 1 configuration parameter value of the number of information bits included in the second information block comprises the number of load bits included in the second information block.

As one embodiment, at least 1 configuration parameter value of the number of information bits included in the second information block comprises the total number of the information bits included in the second information block.

As one embodiment, at least 1 configuration parameter value of the number of information bits included in the second information block comprises the number of information bits for specific purposes included in the second information block.

As one embodiment, the target configuration set comprises at least 1 configuration parameter value of whether the second information block comprises a CRC bit.

As one embodiment, the target configuration set comprises at least 1 configuration parameter value of the number of CRC bits included in the second information block.

As one embodiment, at least 1 configuration parameter value of a sequence generating the target wake-up signal comprises a sequence length for generating the target wake-up signal.

As one embodiment, at least 1 configuration parameter value of a sequence generating the target wake-up signal comprises a sequence type for generating the target wake-up signal.

As one embodiment, at least 1 configuration parameter value of a sequence generating the target wake-up signal comprises a value of a root of the sequence for generating the target wake-up signal.

As one embodiment, at least 1 configuration parameter value of a sequence generating the target wake-up signal comprises a candidate value set for cyclic shift of the sequence for generating the target wake-up signal.

As one embodiment, at least 1 configuration parameter value of a sequence generating the target wake-up signal comprises an initialization value of the sequence for generating the target wake-up signal.

As one embodiment, at least 1 configuration parameter value of a sequence generating the target wake-up signal comprises a group hopping value of the sequence for generating the target wake-up signal.

As one embodiment, at least 1 configuration parameter value of a sequence generating the target wake-up signal comprises a sequence hopping value of the sequence for generating the target wake-up signal.

As one embodiment, at least 1 configuration parameter value of a sequence generating the target wake-up signal comprises an oversampling value of the sequence for generating the target wake-up signal.

As one embodiment, at least 1 configuration parameter value of a sequence generating the target wake-up signal comprises a point value of DFT (or FFT or IDFT or IFFT) of the sequence for generating the target wake-up signal.

As one embodiment, at least 1 configuration parameter value of the number of time-domain resources occupied by the target wake-up signal comprises the length of a cyclic prefix (CP) occupied by the target wake-up signal in a time domain.

As one embodiment, at least 1 configuration parameter value of the number of time-domain resources occupied by the target wake-up signal comprises the number of OFDM symbols occupied by the target wake-up signal in a time domain.

As one embodiment, at least 1 configuration parameter value of the number of time-domain resources occupied by the target wake-up signal comprises the number of slots occupied by the target wake-up signal in a time domain.

As one embodiment, at least 1 configuration parameter value of the number of time-domain resources occupied by the target wake-up signal comprises times of repetition of the target wake-up signal in a time domain.

As one embodiment, at least 1 configuration parameter value of the number of time-domain resources occupied by the target wake-up signal comprises the number of $T_c$ occupied by the target wake-up signal in a time domain, wherein $T_c = 1/(480 \cdot 10^3 \cdot 4096)$ seconds.

As one embodiment, at least 1 configuration parameter value of the number of time-domain resources occupied by the target wake-up signal comprises the number of SS/PBCH (synchronization signal/physical broadcast channel) blocks associated with the target wake-up signal in a time domain, and the number of the time-domain resources occupied by the target wake-up signal is related to the number of the SS/PBCH blocks associated with the target wake-up signal in the time domain.

As one embodiment, at least 1 configuration parameter value of the number of time-domain resources occupied by the target wake-up signal comprises the number of POs associated with the target wake-up signal, and the number of the time-domain resources occupied by the target wake-up signal is related to the number of the POs associated with the target wake-up signal.

### Embodiment 12

Embodiment 12 illustrates a structural block diagram of a processing apparatus in a first node device according to one embodiment, as shown in FIG. 12. In FIG. 12, a processing apparatus 1200 in the first node device comprises a first transceiver 1201 and a first receiver 1202. The first transceiver 1201 comprises a transmitting device/receiving device 456 (comprising an antenna 460), a receiving processor 452, a transmitting processor 455, and a controller/processor 490 in FIG. 4 of the present application; and the first receiver 1202 comprises a transmitting device/receiving device 456 (comprising an antenna 460), a receiving processor 452, and a controller/processor 490 in FIG. 4 of the present application.

In Embodiment 12, the first transceiver 1201 receives a first information block and monitors a target wake-up signal, the first information block is used for determining X1 configuration sets, any one of the X1 configuration sets comprises at least 1 configuration parameter value, and the X1 is a positive integer greater than 1; the first receiver 1202 determines whether to monitor first signaling in a first occasion; wherein the target wake-up signal carries a second information block, and the second information block is used for determining whether to monitor the first signaling in the first occasion; a target configuration set is one of the X1 configuration sets, and the target configuration set comprises at least 1 configuration parameter value of the target wake-up signal; a monitor of the target wake-up signal belongs to a first device group, and the first device group comprises at least 1 piece of user equipment; and at least one of an identifier of the first device group or the time-domain position of the first occasion is used for determining the target configuration set from the X1 configuration sets, and an identifier of the monitor of the target wake-up signal is used for determining the first occasion.

As one embodiment, the first device group is one of X2 device groups, X2 identifiers respectively correspond to the X2 device groups, any one of the X2 device groups comprises at least 1 piece of user equipment, and the X2 is a positive integer greater than 1; and a first identifier and a second identifier are respectively two different identifiers in the X2 identifiers, one piece of user equipment included in the device group corresponding to the first identifier in the X2 device groups is assigned the first identifier, and one piece of user equipment included in the device group corresponding to the second identifier in the X2 device groups is not assigned an identifier or is assigned the second identifier.

As one embodiment, the first occasion belongs to a first occasion group, the first occasion group is one of X1 occasion groups, and any one of the X1 occasion groups comprises at least one occasion; any occasion included in any one of the X1 occasion groups belongs to a first time window, and the first information block is used for determining the X1 occasion groups from the first time window; and the X1 occasion groups correspond to the X1 configuration sets one by one, and the target configuration set is a configuration set corresponding to the first occasion group.

As one embodiment, the first transceiver 1201 transmits a third information block, wherein the third information block is used for indicating at least 1 band, and a monitor of the target wake-up signal supports a reception of a wake-up signal on each band indicated by the third information block.

As one embodiment, the first information block is used for determining a time-domain position relationship between a time-domain resource occupied by the target wake-up signal and the first occasion, and the first information block is used for determining the number of device groups associated with the first occasion.

As one embodiment, the first receiver 1202 determines whether to monitor second signaling, wherein the second signaling is used for indicating whether to monitor the first signaling in the first occasion; and at least one of the second information block or the first device group is used for determining whether to monitor the second signaling.

As one embodiment, the target configuration set comprises at least one of the following steps: a configuration parameter value of a frequency-domain resource occupied by the target wake-up signal, a configuration parameter value of a number of information bits included in the second information block, a configuration parameter value of a sequence generating the target wake-up signal, and a configuration parameter value of a number of time-domain resources occupied by the target wake-up signal.

**Embodiment 13**

Embodiment 13 illustrates a structural block diagram of a processing apparatus in a second node device according to one embodiment, as shown in FIG. 13. In FIG. 13, a processing apparatus 1300 in the second node device comprises a second transceiver 1301 and a first transmitter 1302. The second transceiver 1301 comprises a transmitting device/receiving device 416 (comprising an antenna 460), a receiving processor 412, a transmitting processor 415, and a controller/processor 440 in FIG. 4 of the present application; and the first transmitter 1302 comprises a transmitting device/receiving device 416 (comprising an antenna 460), a transmitting processor 415 and a controller/processor 440 in FIG. 4 of the present application.

In Embodiment 13, the second transceiver 1301 transmits a first information block and transmits a target wake-up signal, the first information block is used for determining X1 configuration sets, any one of the X1 configuration sets comprises at least 1 configuration parameter value, and the X1 is a positive integer greater than 1; the first transmitter 1302 transmits first signaling in a first occasion, wherein the target wake-up signal carries a second information block, and the second information block is used for determining whether to monitor the first signaling in the first occasion; a target configuration set is one of the X1 configuration sets, and the target configuration set comprises at least 1 configuration parameter value of the target wake-up signal; a monitor of the target wake-up signal belongs to a first device group, and the first device group comprises at least 1 piece of user equipment; and at least one of an identifier of the first device group or the time-domain position of the first occasion is used for determining the target configuration set from the X1 configuration sets, and an identifier of the monitor of the target wake-up signal is used for determining the first occasion.

As one embodiment, the first device group is one of X2 device groups, X2 identifiers respectively correspond to the X2 device groups, any one of the X2 device groups comprises at least 1 piece of user equipment, and the X2 is a positive integer greater than 1; and a first identifier and a second identifier are respectively two different identifiers in the X2 identifiers, one piece of user equipment included in the device group corresponding to the first identifier in the X2 device groups is assigned the first identifier, and one piece of user equipment included in the device group corresponding to the second identifier in the X2 device groups is not assigned an identifier or is assigned the second identifier.

As one embodiment, the first occasion belongs to a first occasion group, the first occasion group is one of X1 occasion groups, and any one of the X1 occasion groups comprises at least one occasion; any occasion included in any one of the X1 occasion groups belongs to a first time window, and the first information block is used for determining the X1 occasion groups from the first time window; and the X1 occasion groups correspond to the X1 configuration sets one by one, and the target configuration set is a configuration set corresponding to the first occasion group.

As one embodiment, the second transceiver 1301 receives a third information block, wherein the third information block is used for indicating at least 1 band, and a monitor of the target wake-up signal supports a reception of a wake-up signal on each band indicated by the third information block.

As one embodiment, the first information block is used for determining a time-domain position relationship between a time-domain resource occupied by the target wake-up signal and the first occasion, and the first information block is used for determining the number of device groups associated with the first occasion.

As one embodiment, the first transmitter 1302 transmits second signaling, wherein the second signaling is used for indicating whether to monitor the first signaling in the first occasion; and at least one of the second information block or the first device group is used for determining whether to monitor the second signaling.

As one embodiment, the target configuration set comprises at least one of the following steps: a configuration parameter value of a frequency-domain resource occupied by the target wake-up signal, a configuration parameter value of a number of information bits included in the second information block, a configuration parameter value of a sequence generating the target wake-up signal, and a configuration parameter value of a number of time-domain resources occupied by the target wake-up signal.

Those of ordinary skill in the art can understand that all or part of the steps in the above method may be completed by instructing relevant hardware through a program, and the program may be stored in a computer-readable storage medium, such as a read-only memory, a hard disk or an optical disk. Optionally, all or part of the steps in the above embodiments may also be implemented using one or more integrated circuits. Accordingly, each module unit in the above embodiments may be implemented in the form of hardware or in the form of a software function module, and the present application is not limited to any specific form of software and hardware combination. The first node device or the second node device or the UE or the terminal in the present application includes, but is not limited to, mobile phones, tablet computers, laptops, network cards, low-power devices, eMTC devices, NB-IoT devices, vehicle-mounted communication devices, aircrafts, airplanes, drones, remote-controlled airplanes and other wireless communication devices. The base station device or base station or network side device in the present application includes, but is not limited to, macrocellular base stations, microcellular base stations, Femtocells, relay base stations, eNBs, gNBs, transmission and reception points (TRPs), relay satellites, satellite base stations, aerial base stations and other wireless communication devices.

Those skilled in the art should understand that the present invention may be implemented in other specified forms without departing from its core or basic features. Therefore, the embodiments disclosed at present should be regarded as descriptive rather than restrictive in any case. The scope of the invention is determined by the appended claims rather than the previous description, and all changes within their equivalent meanings and areas are deemed to be comprised therein.

**Claims**

1. A first node device used in wireless communication, comprising:

   a first transceiver for receiving a first information block and monitoring a target wake-up signal, wherein the first information block is used for determining X1 configuration sets, any one of the X1 configuration sets comprises at least 1 configuration parameter value, and the X1 is a positive integer greater than 1;
   and a first receiver for determining whether to monitor first signaling in a first occasion;
   wherein the target wake-up signal carries a second information block, and the second information block is used for determining whether to monitor the first signaling in the first occasion; a target configuration set is one of the X1 configuration sets, and the target configuration set comprises at least 1 configuration parameter value of the target wake-up signal; a monitor of the target wake-up signal belongs to a first device group, and the first device group comprises at least 1 piece of user equipment; and at least one of an identifier of the first device group or a time-domain position of the first occasion is used for determining the target configuration set from the X1 configuration sets, and an identifier of the monitor of the target wake-up signal is used for determining the first occasion.

2. The first node device according to claim 1, wherein the first device group is one of X2 device groups, X2 identifiers respectively correspond to the X2 device groups, any one of the X2 device groups comprises at least 1 piece of user equipment, and the X2 is a positive integer greater than 1; and a first identifier and a second identifier are respectively two different identifiers in the X2 identifiers, one piece of user equipment included in a device group corresponding to the first identifier in the X2 device groups is assigned the first identifier, and one piece of user equipment included in a device group corresponding to the second identifier in the X2 device groups is not assigned an identifier or is assigned the second identifier.

3. The first node device according to claim 1 or 2, wherein the first occasion belongs to a first occasion group, the first occasion group is one of X1 occasion groups, and any one of the X1 occasion groups comprises at least one occasion; any occasion included in any one of the X1 occasion groups belongs to a first time window, and the first information block is used for determining the X1 occasion groups from the first time window; and the X1 occasion groups correspond to the X1 configuration sets one by one, and the target configuration set is a configuration set corresponding to the first occasion group.

4. The first node device according to any one of claims 1 to 3, wherein the first transceiver transmits a third information block, wherein the third information block is used for indicating at least 1 band, and the monitor of the target wake-up signal supports a reception of a wake-up signal on each band indicated by the third information block.

5. The first node device according to any one of claims 1 to 4, wherein the first information block is used for determining a time-domain position relationship between a time-domain resource occupied by the target wake-up signal and the first occasion, and the first information block is used for determining a number of device groups associated with the first occasion.

6. The first node device according to any one of claims 1 to 5, wherein the first receiver determines whether to monitor second signaling, wherein the second signaling is used for indicating whether to monitor the first signaling in the first occasion; and at least one of the second information block or the first device group is used for determining whether to monitor the second signaling.

7. The first node device according to any one of claims 1 to 6, wherein the target configuration set comprises at least one of a configuration parameter value of a frequency-domain resource occupied by the target wake-up signal, a configuration parameter value of a number of information bits included in the second information block, a configuration parameter value of a sequence generating the target wake-up signal, and a configuration parameter value of a number of time-domain resources occupied by the target wake-up signal.

8.  A second node device used in wireless communication, comprising:

    a second transceiver for transmitting a first information block and transmitting a target wake-up signal, wherein the first information block is used for determining X1 configuration sets, any one of the X1 configuration sets comprises at least 1 configuration parameter value, and the X1 is a positive integer greater than 1; and a first transmitter for transmitting first signaling in a first occasion; wherein the target wake-up signal carries a second information block, and the second information block is used for determining whether to monitor the first signaling in the first occasion; a target configuration set is one of the X1 configuration sets, and the target configuration set comprises at least 1 configuration parameter value of the target wake-up signal; a monitor of the target wake-up signal belongs to a first device group, and the first device group comprises at least 1 piece of user equipment; and at least one of an identifier of the first device group or a time-domain position of the first occasion is used for determining the target configuration set from the X1 configuration sets, and an identifier of the monitor of the target wake-up signal is used for determining the first occasion.

9.  A method used in a first node for wireless communication, comprising:

    receiving a first information block and monitoring a target wake-up signal, wherein the first information block is used for determining X1 configuration sets, any one of the X1 configuration sets comprises at least 1 configuration parameter value, and the X1 is a positive integer greater than 1; and determining whether to monitor first signaling in a first occasion; wherein the target wake-up signal carries a second information block, and the second information block is used for determining whether to monitor the first signaling in the first occasion; a target configuration set is one of the X1 configuration sets, and the target configuration set comprises at least 1 configuration parameter value of the target wake-up signal; a monitor of the target wake-up signal belongs to a first device group, and the first device group comprises at least 1 piece of user equipment; and at least one of an identifier of the first device group or a time-domain position of the first occasion is used for determining the target configuration set from the X1 configuration sets, and an identifier of the monitor of the target wake-up signal is used for determining the first occasion.

10. A method used in a second node for wireless communication, comprising:

    transmitting a first information block and transmitting a target wake-up signal, wherein the first information block is used for determining X1 configuration sets, any one of the X1 configuration sets comprises at least 1 configuration parameter value, and the X1 is a positive integer greater than 1; and transmitting first signaling in a first occasion; wherein the target wake-up signal carries a second information block, and the second information block is used for determining whether to monitor the first signaling in the first occasion; a target configuration set is one of the X1 configuration sets, and the target configuration set comprises at least 1 configuration parameter value of the target wake-up signal; a monitor of the target wake-up signal belongs to a first device group, and the first device group comprises at least 1 piece of user equipment; and at least one of an identifier of the first device group or a time-domain position of the first occasion is used for determining the target configuration set from the X1 configuration sets, and an identifier of the monitor of the target wake-up signal is used for determining the first occasion.

100

Receive a first information block and monitor a target wake-up signal —101

Determine whether to monitor first signaling in a first occasion —102

FIG. 1

5GS/EPS 200

HSS/UDM —220

NR-RAN/EUTRAN 202

UE —201

NR/evolved node B —203

Other NR/evolved node B —204

UE —241

MME/AMF/SMF —211

Other MME/AMF/SMF —214

S-GW/UPF —212

P-GW/UPF —213

Internet service —230

5GC/EPC 210

FIG. 2

Control plane 300

L3 — RRC —306

PDCP —304

L2 — RLC —303

MAC —302

L1 — PHY —301

305

User plane 350

SDAP —356

L2 — PDCP —354

RLC —353

MAC —352

L1 — PHY —351

355

FIG. 3

400

420

460

450

416

456

415

Transmitting processor

Transmitting device / Receiving device

Transmitting device / Receiving device

455

Transmitting processor

440

Controller/processor

420

460

490

Controller/processor

430

Memory

Receiving processor

Transmitting device / Receiving device

Transmitting device / Receiving device

Receiving processor

Memory

480

412

416

456

452

FIG. 4

N500. Second node

U550. First node

S551. Transmit a third information block

Third information block

S501. Receive the third information block

S502. Send a first information block

First information block

S552. Receive the first information block

S503. Transmit a target wake-up signal

Target wake-up signal

S553. Monitor the target wake-up signal

S504. Transmit first signaling in a first occasion

First signaling

S554. Monitor the first signaling in the first occasion

End

End

FIG. 5

N600. Second node

U650. First node

S651. Transmit a third information block

Third information block

S601. Receive the third information block

S602. Send a first information block

First information block

S652. Receive the first information block

S653. Monitor the target wake-up signal

End

End

FIG. 6

First identifier — — — — Second identifier
First identifier — — —
First identifier — — —
First identifier — — — — Second identifier
⋮ ⋮
First identifier — — — — Second identifier
First identifier — — —

FIG. 7

. . .

Time

First time window

FIG. 8

Reference moment of
a first occasion

Time

Time offset

FIG. 9

Time

FIG. 10

Frequency domain resource

Number of information bits

Sequence configuration

Time domain resource

FIG. 11

1200

First node
device

First transceiver
1201

First receiver
1202

FIG. 12

1300

Second node
device

Second transceiver
1301

First transmitter
1302

FIG. 13

## INTERNATIONAL SEARCH REPORT

| International application No. |
|---|
| **PCT/CN2023/134209** |

**A.   CLASSIFICATION OF SUBJECT MATTER**

H04W 52/02(2009.01)i

According to International Patent Classification (IPC) or to both national classification and IPC

**B.   FIELDS SEARCHED**

Minimum documentation searched (classification system followed by classification symbols)

IPC: H04W

Documentation searched other than minimum documentation to the extent that such documents are included in the fields searched

Electronic data base consulted during the international search (name of data base and, where practicable, search terms used)

CNTXT, WPABSC, ENTXTC, ENTXT, VCN, VEN, CJFD, 3GPP: 唤醒/WUS, 低, 功耗/功率, 配置, 集合/组, 时机/时域, 监测, 标识, wake up, low, power, configuration, set/group, opportunity/time domain, monitor, id

**C.   DOCUMENTS CONSIDERED TO BE RELEVANT**

| Category* | Citation of document, with indication, where appropriate, of the relevant passages | Relevant to claim No. |
|---|---|---|
| Y | CN 113396613 A (QUALCOMM INC.) 14 September 2021 (2021-09-14) description, paragraphs 94-150 | 1-10 |
| Y | CN 111132280 A (VIVO MOBILE COMMUNICATION CO., LTD.) 08 May 2020 (2020-05-08) description, paragraphs 60-124 | 1-10 |
| A | WO 2020102972 A1 (HUAWEI TECHNOLOGIES CO., LTD.) 28 May 2020 (2020-05-28) entire document | 1-10 |
| A | US 2022182936 A1 (TELEFONAKTIEBOLAGET LM ERICSSON (PUBL)) 09 June 2022 (2022-06-09) entire document | 1-10 |

☐ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **12 January 2024** | **20 January 2024** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/134209**

| Patent document cited in search report | | | Publication date (day/month/year) | Patent family member(s) | | | Publication date (day/month/year) |
|---|---|---|---|---|---|---|---|
| CN | 113396613 | A | 14 September 2021 | EP | 3925315 | A1 | 22 December 2021 |
| | | | | WO | 2020168159 | A1 | 20 August 2020 |
| | | | | US | 2020267646 | A1 | 20 August 2020 |
| | | | | US | 11375452 | B2 | 28 June 2022 |
| CN | 111132280 | A | 08 May 2020 | None | | | |
| WO | 2020102972 | A1 | 28 May 2020 | None | | | |
| US | 2022182936 | A1 | 09 June 2022 | JP | 2023145506 | A | 11 October 2023 |
| | | | | US | 11778559 | B2 | 03 October 2023 |
| | | | | WO | 2020204804 | A1 | 08 October 2020 |
| | | | | EP | 3949542 | A1 | 09 February 2022 |
| | | | | ZA | 202108524 | B | 21 December 2022 |
| | | | | CO | 2021014035 | A2 | 29 October 2021 |
| | | | | KR | 20210146380 | A | 03 December 2021 |
| | | | | JP | 2022528893 | A | 16 June 2022 |
| | | | | JP | 7312848 | B2 | 21 July 2023 |

Form PCT/ISA/210 (patent family annex) (July 2022)